(19) **Europäisches Patentamt**
**European Patent Office**
**Office européen des brevets**

(11) **EP 4 537 018 B1**

(12) **FASCICULE DE BREVET EUROPEEN**

(45) Date de publication et mention de la délivrance du brevet:
**18.02.2026  Bulletin 2026/08**

(21) Numéro de dépôt: **23731186.5**

(22) Date de dépôt: **05.06.2023**

(51) Classification Internationale des Brevets (IPC):
*F23C 9/00* *(2006.01)*     *F23L 7/00* *(2006.01)*

(52) Classification Coopérative des Brevets (CPC):
**F23C 9/00; F23L 7/007;** Y02E 20/34

(86) Numéro de dépôt international:
**PCT/EP2023/065006**

(87) Numéro de publication internationale:
**WO 2023/237496 (14.12.2023 Gazette 2023/50)**

(54) **SYSTEME DE COMBUSTION APTE A FONCTIONNER AVEC UN RECYCLAGE DU GAZ DE COMBUSTION**

VERBRENNUNGSSYSTEM ZUM BETRIEB MIT RECYCLING DES VERBRENNUNGSGASES

COMBUSTION SYSTEM ABLE TO OPERATE WITH RECYCLING OF THE COMBUSTION GAS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats de validation désignés:
**MA**

(30) Priorité:  **09.06.2022  FR 2205538**
             **03.11.2022  FR 2211436**

(43) Date de publication de la demande:
**16.04.2025  Bulletin 2025/16**

(73) Titulaire: **Carbodown**
**59310 Nomain (FR)**

(72) Inventeur: **ZEMMOURI, Jaouad**
**59310 Nomain (FR)**

(74) Mandataire: **Matkowska, Franck**
**Matkowska & Associés**
**9, rue Jacques Prévert**
**59650 Villeneuve d'Ascq (FR)**

(56) Documents cités:
**WO-A2-2011/148298     US-A1- 2008 286 707**
**US-A1- 2009 293 782**

**Description**

**Domaine technique**

La présente invention concerne le domaine de la combustion avec un recyclage d'au moins une partie du gaz de combustion.

**Art antérieur**

Une combustion dite *« classique »* consiste à mélanger dans une installation de combustion (four, chaudière, etc.) de l'air (comburant) à un combustible dans des conditions de hautes températures pour créer l'oxydation. La réaction est exothermique et s'entretient naturellement. L'air contient 21% de dioxygène ($O_2$) et le volume d'air utilisé est contrôlé de sorte que la quantité de dioxygène soit suffisante pour la combustion.

En combustion classique, les fumées de combustion comportent de la vapeur d'eau ($H_2O$) et des produits de combustion en phase gazeuse, dont principalement du diazote ($N_2$) en phase gazeuse, et du dioxyde de carbone ($CO_2$) en phase gazeuse.

Dans le présent texte, on désigne par les termes « gaz de combustion », les produits de combustion en phase gazeuse qui sont rejetés après la combustion.

Si on souhaite capter le $CO_2$ de ces fumées, il est aisé d'éliminer la vapeur d'eau en condensant ces fumées de combustion et en recueillant l'eau sous forme liquide. En revanche la difficulté principale réside dans la séparation de l'azote et du dioxyde carbone. En outre, en combustion classique, et selon le type de combustible utilisé, le gaz de combustion peut également comporter d'autres produits de combustion polluants en phase gazeuse, en quantité plus ou moins importante, tels que par exemple SOx (oxydes de soufre), NOx (oxydes d'azote), HCl (chlorure d'hydrogène), HF (fluorure d'hydrogène), etc... Par conséquent si on souhaite capter le $CO_2$ de ces fumées, il faut également séparer le $CO_2$ de ces autres polluants.

Plusieurs solutions ont été envisagées pour capter le $CO_2$ dans des fumées issues de combustion classique, mais leur coût reste très élevé.

Pour réduire l'émission de polluants dans les fumées de combustion, il est connu de remplacer la combustion classique susvisée, par une combustion, dite « oxycombustion », dans laquelle l'air (comburant) est remplacé par du dioxygène dans des proportions stœchiométriques, le nombre d'atomes d'oxygène étant égal à celui nécessaire pour oxyder l'ensemble des atomes du combustible.

La production de dioxygène pour mettre en œuvre l'oxycombustion peut par exemple être obtenue de manière connue par cryogénie ou par électrolyse de l'eau.

Dans le cas par exemple d'une oxycombustion de méthane ($CH_4$), on produit des fumées de combustion constituées d'1/3 de $CO_2$ en phase gazeuse et de 2/3 de vapeur d'eau en volume. Dans le cas d'autres combustibles, on aura en plus les polluants issus de la combustion, comme par HCl, SOx, etc. Si le combustible n'est pas azoté, de manière avantageuse les fumées ne contiendront naturellement pas de NOx.

L'équation de la réaction chimique de l'oxycombustion du méthane ($CH_4$) est la suivante :

$$CH_4 + 2O_2 \rightarrow CO_2 + 2H_2O \text{ -891 kJ/mole de } CH_4$$

Cela signifie que chaque mole de $CH_4$ produira une puissance de 891 kJ vers l'extérieur.

Pour les autres combustibles, les réactions sont analogues, avec l'apparition d'autres composés si le combustible contient d'autres atomes que le carbone et l'hydrogène.

Dans le cas par exemple de l'oxycombustion du méthane, on constate qu'il est plus aisé de capter le $CO_2$. Il suffit pour cela de condenser l'eau des fumées de combustion par un procédé de refroidissement ou d'assèchement pour obtenir du $CO_2$ à l'état gazeux.

Il est donc connu à ce jour de mettre en œuvre un condenseur pour condenser les fumées d'oxycombustion afin de faciliter le captage du $CO_2$.

Une difficulté importante de l'oxycombustion réside toutefois dans la difficulté de maîtrise de la combustion, car à la différence de la combustion classique, la température d'oxycombustion peut rapidement et de manière non contrôlée devenir très élevée dans la chambre de combustion, de sorte que les installations de combustion classiques ne résistent pas.

Pour pallier cette difficulté, on a déjà proposé des installations permettant d'améliorer l'oxycombustion, en condensant et en recyclant au moins une partie du gaz de combustion comportant essentiellement du $CO_2$ en phase gazeuse, de manière à la mélanger avec le dioxygène et à obtenir un gaz comburant ($O_2$-$CO_2$) qui permet avantageusement d'abaisser la température de combustion.

Ce perfectionnement permet une oxycombustion à base de dioxygène avec recyclage du gaz de combustion plus facilement maîtrisée, par rapport à une oxycombustion mettant en œuvre uniquement du dioxygène comme comburant, tout en réduisant l'émission de polluants par rapport à une combustion classique et en facilitant le captage du $CO_2$.

Ces installations sont prévues pour fonctionner uniquement en oxycombustion avec recyclage du gaz de combustion, ce qui induit plusieurs inconvénients.

Les procédures de démarrage et d'arrêt de ces installations sont des phases de fonctionnement critiques et risquées et peuvent de manière préjudiciable conduire à des températures d'oxycombustion, avec recyclage du gaz de combustion, non contrôlées et trop élevées dans la chambre de combustion.

Au cours de l'oxycombustion, avec recyclage du gaz de combustion, une baisse de concentration en dioxygène trop importante dans le gaz comburant peut de manière préjudiciable aboutir à un arrêt intempestif de la combustion dans la chambre de combustion de l'installation, ce qui peut avoir des conséquences graves par exemple dans une chaîne de production industrielle utilisant l'énergie thermique produite.

On a par ailleurs proposé dans la demande de brevet internationale WO 2011/148298 un système de combustion avec recyclage du gaz de combustion au moyen d'un ventilateur monté sur la boucle de recyclage. Ce système de combustion peut fonctionner soit en combustion classique avec apport d'air, soit en oxycombustion avec apport de dioxygène et sans apport d'air, le ventilateur monté sur la boucle de recyclage étant en fonctionnement dans les deux cas. Cette publication décrit en outre la mise en œuvre d'une unité de commande, qui est programmée pour piloter, pendant une période transitoire, le débit d'apport d'air et le débit d'apport de dioxygène, de manière à pouvoir passer de la combustion classique avec apport d'air à l'oxycombustion avec apport de dioxygène et sans apport d'air, sans interrompre le procédé de combustion.

Lorsque le système de combustion décrit dans cette publication fonctionne en oxycombustion, un dysfonctionnement de la source de dioxygène peut se produire aboutissant par exemple à une baisse intempestive et non contrôlée de la concentration de dioxygène dans le gaz comburant alimentant la chambre de combustion. Cette insuffisance en dioxygène peut avoir plusieurs causes éventuellement cumulatives : une interruption accidentelle de l'alimentation en dioxygène du fait d'un arrêt intempestif de la production in situ de dioxygène ou d'une source de dioxygène qui est vide ; un ralentissement intempestif de la production in situ de dioxygène ou une baisse intempestive du débit ou de la pression d'alimentation en dioxygène. Or une baisse trop importante de la concentration en dioxygène dans le gaz comburant peut occasionner de manière préjudiciable un arrêt intempestif de l'oxycombustion.

La solution technique décrite dans la demande de brevet internationale WO 2011/148298 présente l'inconvénient de pas pouvoir adapter automatiquement son fonctionnement en cas d'insuffisance intempestive en dioxygène.

Par ailleurs, dans le système de combustion susvisé, lorsqu'on souhaite solliciter la chambre de combustion pour fournir plus d'énergie thermique pendant l'oxycombustion, il y a un risque d'atteindre des températures non contrôlées et trop élevées dans la chambre de combustion, et de provoquer des risques d'explosion. A l'inverse, lorsqu'on souhaite diminuer la fourniture d'énergie thermique par la chambre de combustion pendant l'oxycombustion, on risque au contraire d'occasionner un arrêt intempestif de la combustion.

### Objectif de l'invention

L'invention a pour objectif principal de proposer un système de combustion qui peut fonctionner avec recyclage d'au moins une partie du gaz de combustion, mais qui permet de pallier tout ou partie des inconvénients susvisés inhérents aux installations d'oxycombustion de l'art antérieur qui mettent en œuvre un tel recyclage du gaz de combustion.

### Résumé de l'invention

L'invention a ainsi pour objet un système de combustion comportant un dispositif de combustion permettant la combustion d'un combustible au moyen d'au moins un gaz comburant, une unité d'alimentation en gaz comburant qui est raccordée au dispositif de combustion et qui comporte un mélangeur et une source de dioxygène gazeux qui fournit un gaz riche en dioxygène et qui est raccordée à une première entrée du mélangeur via un dispositif de contrôle du débit du gaz riche en dioxygène, des moyens de recyclage qui comportent une boucle de recyclage entre le dispositif de combustion et une deuxième entrée du mélangeur, et une vanne de recyclage montée sur la boucle de recyclage, une première dérivation qui est réalisée sur la boucle de recyclage et qui comporte une vanne d'évacuation, une deuxième dérivation qui est réalisée sur la boucle de recyclage en aval de la première dérivation et de la vanne de recyclage, et une unité de commande. L'unité de commande est adaptée pour commander le dispositif de contrôle du débit du gaz riche en dioxygène, la vanne de recyclage et la vanne d'évacuation, de manière à pouvoir configurer le système de combustion dans un mode de fonctionnement choisi parmi au moins deux modes de fonctionnement différents (M1 ; M2) et à pouvoir passer d'un mode de fonctionnement à l'autre : un premier mode de fonctionnement (M1) dans lequel la vanne de recyclage est fermée, la vanne d'évacuation est ouverte, et le mélangeur n'est pas alimenté en gaz riche en dioxygène en provenance de la source de dioxygène gazeux (le dispositif de contrôle du débit étant fermé), et un deuxième mode de fonctionnement (M2), dans lequel la vanne de recyclage est ouverte et la vanne d'évacuation est au moins partiellement ouverte ou est fermée, et le mélangeur est alimenté au moins avec du gaz riche en dioxygène fourni par la source de dioxygène gazeux (le dispositif de contrôle de débit étant ouvert), et avec au moins une partie du gaz de combustion produit par le dispositif de combustion.

La deuxième dérivation débouche à l'air libre pendant les deux modes de fonctionnement (M1 ; M2), et a pour fonction d'une part, dans les deux modes de fonctionnement (M1 ; M2), lorsque la vanne d'évacuation est au moins partiellement ouverte et la vanne de recyclage est fermée ou ouverte, de faire entrer de l'air dans la boucle de recyclage afin alimenter la deuxième entrée du mélangeur au moins avec de l'air entrant, et a pour fonction d'autre part, dans le deuxième mode de fonctionnement (M2), lorsque la vanne d'évacuation est fermée et la vanne de recyclage est ouverte, de permettre d'évacuer de la boucle de recyclage un surplus du gaz de combustion produit par le dispositif de combustion, l'autre partie du gaz de combustion produit par le dispositif de combustion alimentant la deuxième entrée du mélangeur.

Les termes « *gaz riche en dioxygène* » signifient que le gaz contient au moins 40% (pourcentage volumique) de dioxygène.

Dans ledit premier mode de fonctionnement (M1), le mélangeur est alimenté au moins avec de l'air aspiré dans l'air ambiant via la deuxième dérivation et les fumées de combustion émises par le dispositif de combustion sont évacuées via la première dérivation sans être recyclées.

Il en résulte que le gaz comburant contient au moins de l'air et ne contient pas de dioxygène en provenance de la source de dioxygène gazeux. La combustion dans le dispositif de combustion est ainsi une combustion classique.

Dans ce premier mode de fonctionnement et dans une variante particulière de réalisation, le gaz comburant est de préférence constitué uniquement d'air.

Dans ledit deuxième mode de fonctionnement (M2), le gaz comburant contient au moins du gaz riche en dioxygène en provenance de la source de dioxygène gazeux et au moins une partie du gaz de combustion qui a été recyclée.

Il en résulte que la combustion dans le dispositif de combustion est de type oxycombustion avec recyclage du gaz de combustion.

Plus particulièrement, dans ledit deuxième mode de fonctionnement (M2), dans une phase de fonctionnement particulière, désignée ultérieurement *« oxycombustion dégradée »* le gaz comburant peut comporter de l'air, qui a été aspiré dans l'air ambiant via la deuxième dérivation. Dans ledit deuxième mode de fonctionnement et dans une autre phase de fonctionnement particulière désignée ultérieurement *« oxycombustion améliorée »,* le gaz comburant ne contient pas d'air aspiré dans l'air ambiant via la deuxième dérivation.

Dans l'invention, la deuxième dérivation est à double sens de circulation et agit ainsi comme une sécurité passive.

Lorsque le système de combustion est dans le premier mode de fonctionnement, le débit d'air entrant aspiré dans la boucle de recyclage, via la deuxième dérivation, s'adapte automatiquement sans intervenir sur le système de combustion. En particulier, le débit d'air entrant aspiré dans la boucle de recyclage s'adapte automatiquement au débit du gaz de combustion produit par le dispositif de combustion, et le cas échéant de manière à compenser automatiquement un changement de débit de ce gaz de combustion. Dans le deuxième mode de fonctionnement avec vanne d'évacuation au moins partiellement ouverte (phase de fonctionnement particulière dite *« oxycombustion dégradée* ») , le débit d'air entrant aspiré dans la boucle de recyclage, via la deuxième dérivation, s'adapte automatiquement au débit du gaz de combustion produit par le dispositif de combustion et au débit du gaz riche en dioxygène, et le cas échéant de manière à compenser automatiquement un changement de débit ce gaz de combustion et/ou un changement de débit du gaz riche en dioxygène.

Lorsque le système de combustion est dans le deuxième mode de fonctionnement avec vanne d'évacuation fermée (phase de fonctionnement dite *« oxycombustion améliorée*), toute partie excédentaire du gaz de combustion produit par le dispositif de combustion est évacuée de la boucle de recyclage, via la deuxième dérivation, avec un débit qui s'adapte automatiquement sans intervenir sur le système de combustion. En particulier, le débit de la partie excédentaire du gaz de combustion qui est évacuée de la boucle de recyclage, via la deuxième dérivation, s'adapte automatiquement au débit du gaz de combustion produit par le dispositif de combustion et au débit du gaz riche en dioxygène, et le cas échéant de manière à compenser automatiquement un changement de débit ce gaz de combustion et/ou un changement de débit du gaz riche en dioxygène.

Plus particulièrement, et à la différence notamment de la solution décrite dans la demande de brevet international WO 2011/148298, entre la deuxième dérivation et la deuxième entrée du mélangeur (c'est-à-dire en aval de la deuxième dérivation), la boucle de recyclage du système de combustion de l'invention est dépourvue de moyens de mise en circulation forcée d'air, de type ventilateur ou compresseur, lesquels moyens de mise en circulation forcée d'air, en aspirant de l'air dans la boucle de recyclage via la deuxième dérivation, empêcherait l'évacuation de la boucle de recyclage, via la deuxième dérivation, de ladite partie excédentaire du gaz de combustion produit par le dispositif de combustion.

Le dispositif de combustion peut être un dispositif de combustion courant du marché ou un dispositif de combustion particulier qui a été développé de manière spécifique. Ce dispositif de combustion peut avoir des entrées d'air à différents points d'injection en fonction du besoin de la combustion. De manière avantageuse, l'invention peut plus particulièrement être mise en œuvre sans qu'il soit nécessaire d'apporter de modification à ce dispositif de combustion.

Plus particulièrement, le système de combustion de l'invention peut comporter les caractéristiques additionnelles et optionnelles suivantes, prises isolément, ou en combinaison les unes avec les autres :

- Le dispositif de de contrôle de débit du gaz riche en dioxygène comporte une vanne de contrôle de débit qui est pilotée par l'unité de commande.
- La vanne de contrôle de débit est une vanne à ouverture et fermeture progressives.
- La vanne de recyclage est une vanne à ouverture et fermeture progressives et/ou la vanne d'évacuation est une vanne à ouverture et fermeture progressives.
- Le système de combustion comporte au moins un capteur adapté pour mesurer la concentration en dioxygène dans le gaz comburant et l'unité de commande est adaptée pour piloter le dispositif de contrôle du débit du gaz riche en dioxygène en fonction de la concentration en dioxygène mesurée par ce capteur au moins pendant le deuxième mode de fonctionnement (M2).
- Le dispositif de combustion comporte un ventilateur ou compresseur adapté pour alimenter le dispositif de combustion en gaz comburant avec un débit donné, qui est de préférence variable.
- Le débit d'alimentation du dispositif de combustion en combustible est variable et le dispositif de combustion comporte un ventilateur ou compresseur adapté pour alimenter le dispositif de combustion en gaz comburant avec un débit, qui varie en fonction du débit d'alimentation du dispositif de combustion en combustible.
- Le système de combustion comporte un dispositif d'injection de dioxyde de carbone raccordé à une entrée du mélangeur et adaptée pour d'injecter du dioxyde de carbone gazeux dans le mélangeur pendant une phase de fonctionnement particulière, dite «oxycombustion dégradée », du deuxième mode de fonctionnement (M2).
- Le système de combustion comporte sur la boucle de recyclage un condenseur adapté pour déshumidifier les fumées de combustion et pour émettre en sortie un gaz de combustion dont au moins une partie est recyclée à l'entrée du mélangeur.
- Le système de combustion comporte un condenseur adapté pour déshumidifier le gaz comburant avant son introduction dans le dispositif de combustion.
- Le condenseur comporte au moins un échangeur comportant un liquide refroidissant.
- L'échangeur comporte un bain de liquide refroidissant, et des moyens d'injection permettant de faire passer le fluide gazeux à déshumidifier à travers ce bain de liquide refroidissant, et de préférence les moyens d'injection permettent d'injecter le fluide gazeux à déshumidifier au-dessous de la surface de ce bain de liquide de refroidissant.
- Le système de combustion comporte au moins un capteur adapté pour mesurer la concentration en dioxygène dans le gaz comburant et l'unité de commande est adaptée pour commander le dispositif de contrôle du débit du gaz riche en dioxygène, la vanne de recyclage et la vanne d'évacuation, de manière à passer du deuxième mode de fonctionnement au premier mode de fonctionnement en fonction de la concentration mesurée en dioxygène dans le gaz comburant.
- L'unité de commande est adaptée pour commander le dispositif de contrôle du débit du gaz riche en dioxygène, la vanne de recyclage et la vanne d'évacuation, de manière à pouvoir passer d'un mode de fonctionnement (M1 ou M2) à l'autre (M2 ou M1) sans arrêter la combustion dans le dispositif de combustion.
- L'unité de commande est adaptée pour commander de manière séquentielle l'ouverture du dispositif de contrôle du débit du gaz riche en dioxygène, l'ouverture de la vanne de recyclage, et de préférence la fermeture totale ou partielle de la vanne d'évacuation, pour passer du premier mode de fonctionnement (M1) au deuxième mode de fonctionnement (M2).
- L'unité de commande est adaptée pour commander de manière séquentielle l'ouverture de la vanne d'évacuation, la fermeture de la vanne de recyclage, et la fermeture du dispositif de contrôle du débit du gaz riche en dioxygène, pour passer du deuxième mode de fonctionnement (M2) au premier mode de fonctionnement (M1).
- Le système de combustion comporte un dispositif de captage du dioxyde de carbone ($CO_2$) adapté pour capter le dioxyde de carbone ($CO_2$) dans au moins une partie du gaz de combustion, lorsque le système de combustion fonctionne dans le deuxième mode de fonctionnement (M2).
- Le gaz riche en dioxygène fourni par la source de dioxygène gazeux comporte au moins 50% de dioxygène, de préférence au moins 80% de dioxygène, et plus préférentiellement encore au moins 90% de dioxygène.
- Le gaz riche en dioxygène fourni par la source de dioxygène gazeux est du dioxygène pur ou quasi pur (au moins 99% de $O_2$).
- Le système de combustion comporte au moins un dispositif de dépollution monté sur la boucle de recyclage et adapté pour capter un ou plusieurs polluants choisis parmi la liste suivante : particules fines, SOx, NOx, acides, métaux lourds, ammoniac, COV.

## Brève description des figures

Les caractéristiques et avantages de l'invention apparaîtront plus clairement à la lecture de la description détaillée ci-après de plusieurs variantes particulières de réalisation de l'invention, lesquelles variantes particulières de réalisation sont décrites à titre d'exemples non limitatifs et non exhaustifs de l'invention, et en référence aux dessins annexés sur lesquels :

- La figure 1 est une représentation schématique d'une première variante particulière de réalisation d'un système de combustion de l'invention.
- La figure 2 représente le système de combustion de la figure 1 dans le premier en mode de fonctionnement M1 (« combustion classique ») ;
- La figure 3 représente le système de combustion de la figure 1 dans le deuxième en mode de fonctionnement M2 (« oxycombustion avec recyclage ») et dans une phase de fonctionnement particulière (« oxycombustion dégradée »).
- La figure 4 représente le système de combustion de la figure 1 dans le deuxième en mode de fonctionnement M2 (« oxycombustion avec recyclage ») et dans une autre phase de fonctionnement particulière (« oxycombustion améliorée »).
- Les figures 5 à 10 sont des représentations schématiques de cinq autres variantes particulières de réalisation d'un système de combustion de l'invention.
- La figure 11 représente un exemple particulier de condenseur pouvant être mis en œuvre dans un système de combustion de l'invention.

## Description détaillée

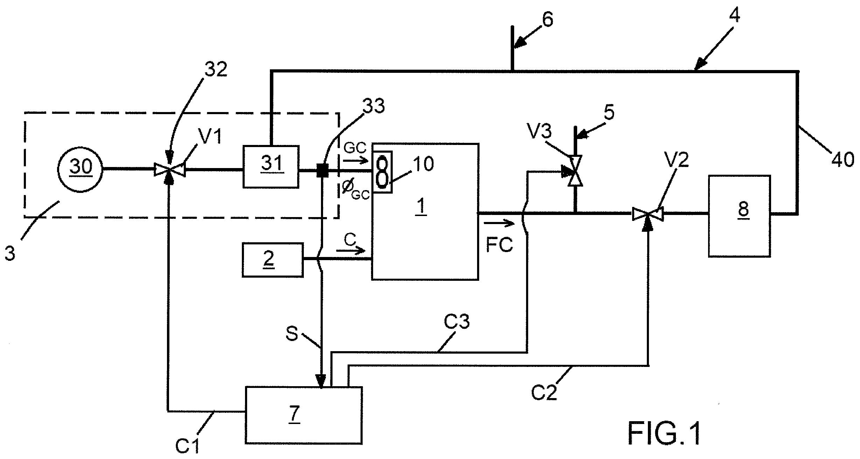

### Système de combustion de la figure1

On a représenté schématiquement sur la figure 1 une première variante de réalisation d'un système de combustion de l'invention comportant :

- un dispositif de combustion 1, qui est alimenté avec un gaz comburant GC provenant d'une unité 3 d'alimentation en gaz comburant GC et avec un combustible C provenant d'une source de combustible 2 et qui, en fonctionnement, émet en sortie des fumées de combustion FC;
- des moyens de recyclage 4, qui comportent une boucle de recyclage 40 entre la sortie du dispositif de combustion 1 et une entrée de l'unité 3 d'alimentation en gaz comburant GC et une vanne de recyclage V2 montée sur la boucle de recyclage 40 ;
- une première dérivation 5, qui est raccordée à la boucle de recyclage 40 et qui comporte une vanne d'évacuation V3,
- une deuxième dérivation 6, qui est raccordée à la boucle de recyclage 40, en aval de la première dérivation 5 et de la vanne de recyclage V2, et qui débouche à l'air libre ;
- une unité de commande 7.

Le dispositif de combustion 1 permet d'une manière générale de réaliser une combustion du combustible C au moyen dudit gaz comburant GC, l'énergie thermique résultant de cette combustion pouvant indifféremment selon l'invention être utilisée dans tout type d'application nécessitant un apport thermique, et par exemple et de manière non limitative pour chauffer un fluide dans une installation de chauffage ou pour alimenter une chaîne de production industrielle en énergie, notamment thermique, mécanique ou électrique. Ce dispositif de combustion 1 peut indifféremment selon l'invention comporter une chaudière classique, un four, ou une chambre de combustion dans laquelle est mis en œuvre un procédé de combustion.

Le dispositif de combustion 1 comporte de manière usuelle un ventilateur (ou compresseur) 10 qui permet de tirer ou pousser le gaz comburant GC dans l'installation de combustion 1, avec un réglage ou une régulation automatique du débit $\theta_{GC}$ de gaz comburant GC entrant dans le dispositif de combustion 1 pour s'adapter au débit du combustible C et satisfaire les besoins en énergie thermique.

Le dispositif de combustion 1 peut être un dispositif de combustion courant du marché ou un dispositif de combustion particulier qui a été développé de manière spécifique.

La réaction de combustion du combustible C au moyen du gaz comburant GC produit des fumées de combustion FC dont la composition dépend du combustible C et du gaz comburant GC.

Dans le cadre de l'invention, le combustible C peut être très différent d'une application à l'autre et peut selon le cas se présenter sous forme solide, liquide ou gazeuse.

L'unité 3 d'alimentation en gaz comburant GC comporte une source 30 de dioxygène gazeux ($O_2$) qui alimente une entrée d'un mélangeur 31, via un dispositif 32 de contrôle de débit commandé par l'unité de commande 7. L'autre entrée du mélangeur 31 est raccordée à la boucle de recyclage 40.

La source 30 de dioxygène gazeux permet de fournir un gaz riche en dioxygène, c'est-à-dire un gaz contenant au moins 40% (pourcentage volumique) de dioxygène.

De préférence, tel que cela sera discuté ultérieurement, le gaz riche en dioxygène peut avantageusement, mais non nécessairement, être constitué de dioxygène pur ou quasi pur (concentration volumique supérieure à 90%).

La source 30 de dioxygène gazeux peut être de tout type connu et peut par exemple comporter une unité de production de dioxygène gazeux par cryogénie et/ou une unité de production de dioxygène gazeux par électrolyse l'eau. La source 30 de dioxygène gazeux peut également être une unité de production d'un gaz riche en dioxygène contenant au moins 40% de dioxygène obtenu par une filtration adaptée d'air au moyen de zéolithes ou équivalent. La source 30 de dioxygène gazeux peut également ne pas être conçue pour produire le gaz riche en dioxygène in situ, mais peut simplement comporter un moyen de stockage du gaz riche en dioxygène qui aura été préalablement produit sur un autre site.

Dans une variante, le dispositif de contrôle de débit 32 peut permettre simplement de stopper ou laisser passer le gaz riche en dioxygène en provenance de la source 30. De préférence néanmoins, ce dispositif 32 de contrôle du débit permet de stopper le gaz riche en dioxygène en provenance de la source 30 ou de laisser passer le gaz riche en dioxygène en provenance de la source 30 en permettant un réglage, par l'unité de commande 7, du débit gazeux à l'entrée du mélangeur 31.

Dans la variante particulière de réalisation de la figure 1, la source 30 de dioxygène gazeux alimente par exemple le mélangeur 31 avec une pression constante et le dispositif 32 de contrôle de débit à l'entrée du mélangeur 31 comporte une vanne V1, de préférence une électrovanne, qui est commandée par l'unité de commande 7.

De préférence, cette vanne V1 est une vanne à ouverture et fermeture progressives.

Dans une autre variante, le dispositif 32 de contrôle de débit à l'entrée du mélangeur 31 peut également comporter un système de contrôle de la pression du gaz en sortie de la source 30 associé éventuellement à une vanne qui peut être une vanne tout ou rien ou une vanne à ouverture et fermeture progressives, le système de contrôle de pression et ladite vanne étant commandés par l'unité de commande 7.

De préférence, l'unité 3 d'alimentation en gaz comburant GC comporte également au moins un capteur 33, qui mesure la concentration en dioxygène dans le gaz comburant GC entrant dans le dispositif de combustion 1 et qui délivre à l'unité de commande 7 un signal S de mesure de cette concentration.

Dans la variante particulière de réalisation de la figure 1, la première dérivation 5 est raccordée à la boucle de recyclage 40 en amont de la vanne V2. La première dérivation 5 peut dans le cas le plus simple être constituée par une simple canalisation qui est équipée de la vanne d'évacuation V3 permettant de contrôler le débit de fluide circulant dans ladite canalisation.

La deuxième dérivation 6 est raccordée à la boucle de recyclage 40 en aval de la vanne V2.

Dans la variante particulière de réalisation de la figure 1, cette deuxième dérivation 6 débouche directement à l'air libre.

Cette deuxième dérivation 6 peut être constituée par une simple canalisation raccordée à une extrémité à la boucle de recyclage 40 et débouchant directement à l'air libre à son autre extrémité. Dans sa version la plus simple, cette deuxième dérivation 6 peut également être une simple ouverture permettant de faire communiquer la boucle de recyclage 40 avec l'air ambiant.

Dans une autre variante de réalisation, la deuxième dérivation 6 peut également alimenter un dispositif de traitement ou plusieurs dispositifs de traitement en cascade des fumées de combustion FC qui s'échappent par cette deuxième dérivation 6, et par exemple un dispositif de dépollution ou plusieurs dispositifs de dépollution en cascade.

Dans le cadre de l'invention, la vanne de recyclage V2 peut être une vanne tout ou rien ou plus préférentiellement une vanne à ouverture et fermeture proportionnelles. De même, la vanne d'évacuation V3 peut être une vanne tout ou rien ou plus préférentiellement une vanne à ouverture et fermeture proportionnelles.

Les vannes V2 et V3 sont de préférence des électrovannes ou des vannes pneumatiques ou hydrauliques.

De préférence, dans la variante de la figure 1, le système de combustion comporte un condenseur 8, qui est monté sur la boucle de recyclage 40, en aval de la première dérivation 5 et en amont de la deuxième dérivation 6, et qui est adapté pour condenser les fumées de combustion FC émises par l'installation de combustion 1 en les refroidissant, lorsque la vanne de recyclage V2 est ouverte.

Dans le cadre de l'invention, ce condenseur 8 peut d'une manière générale comporter tout type d'échangeur permettant, par tout moyen, de refroidir les fumées de combustion FC de manière à réaliser une condensation d'au moins une partie de la vapeur d'eau contenue dans les fumées de combustion F.

Dans la variante particulière de la figure 1, la vanne de recyclage V2 est montée sur la boucle de recyclage 40 en amont du condenseur 8. Dans une autre variante, la vanne de recyclage V2 peut être montée sur la boucle de recyclage 40 après le condenseur 8 (i.e. en aval du condenseur) et avant la deuxième dérivation 6 (i.e. en amont de la deuxième dérivation 6).

L'unité de commande 7 permet de piloter automatiquement le système de combustion, et dans ce cas particulier les trois vannes V1, V2, et V3 au moyen respectivement des signaux de commande C1, C2 et C3, de manière à adapter la composition du gaz comburant GC et permettre avantageusement de faire fonctionner l'installation dans un mode de fonctionnement choisi parmi au moins deux modes de fonctionnement différents (M1 et M2) détaillés ci-après et permettre le passage d'un mode de fonctionnement (M1 ou M2) à l'autre (M2 ou M1).

Cette unité de commande 7 peut être implémentée sous des formes variées, et peut par exemple être réalisée au moyen d'une unité de commande électronique programmable, par exemple du type automate programmable ou d'un circuit électronique programmable comportant un microprocesseur, un microcontrôleur ou des circuits logiques programmables de type FPGA, ou peut encore être réalisée au moyen d'un circuit électronique intégré spécifique de type ASIC.

## Modes de fonctionnement du système de combustion

Le système de combustion de la figure 1 peut être configuré par l'unité de commande 7 pour fonctionner dans au moins deux modes de fonctionnement principaux différents :

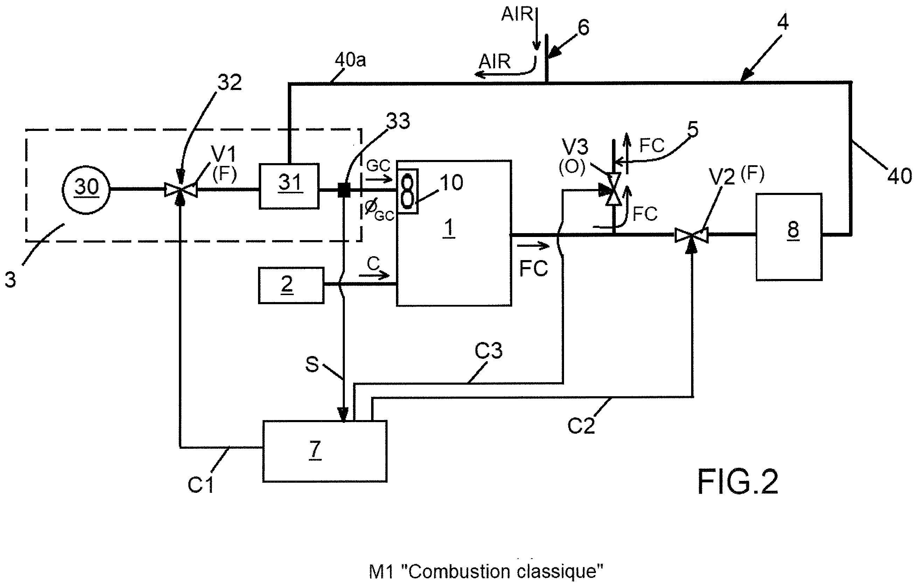

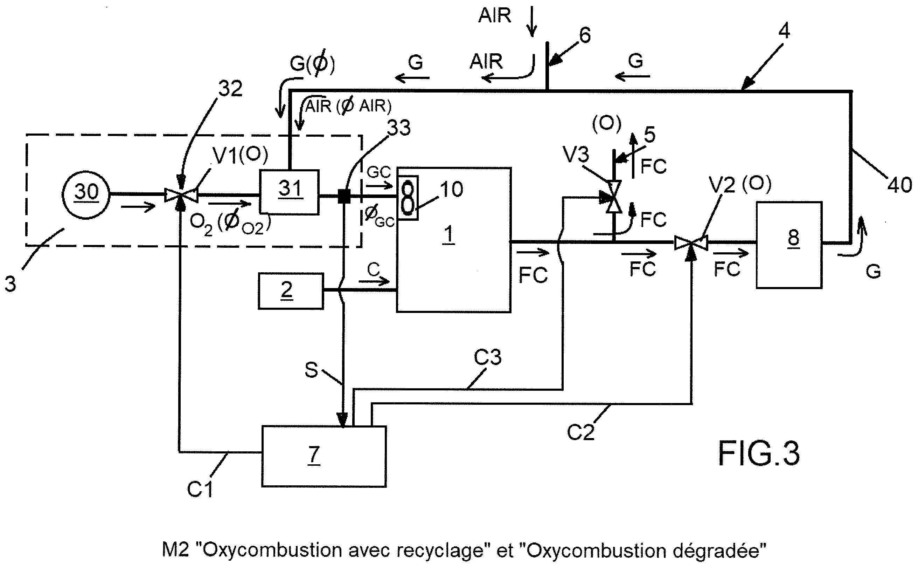

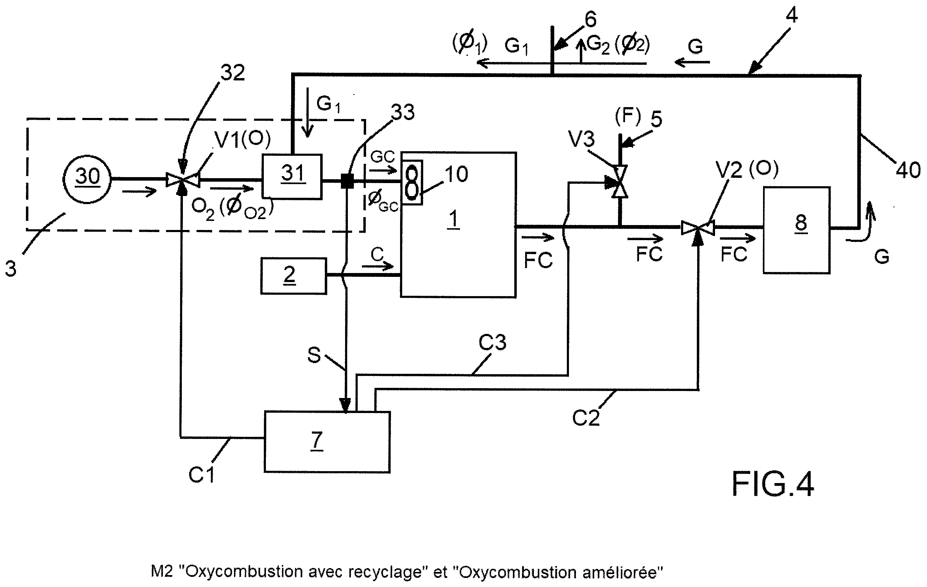

M1 (Figure 2) : un mode fonctionnement dit « combustion classique » dans lequel la vanne V1 du dispositif de contrôle de débit 32 et la vanne de recyclage V2 sont fermées (F) et la vanne d'évacuation V3 est ouverte (O).
M2 (Figures 3 et 4) : un mode de fonctionnement dit « oxycombustion avec recyclage » dans lequel la vanne V1 du dispositif de contrôle de débit 32 et la vanne de recyclage V2 sont ouvertes (O) et la vanne d'évacuation V3 est ouverte (O) (totalement ou partiellement ou est fermée (F).

Le passage d'un mode (M1 ou M2) de fonctionnement à l'autre (M2 ou M1) peut être piloté par l'unité de commande 7 simplement en commandant de manière appropriée le dispositif de contrôle de débit 32 (plus particulièrement la vanne V1), la vanne de recyclage V2 et la vanne d'évacuation V3, et peut avantageusement être réalisé sans stopper la combustion dans le dispositif de combustion 1 et sans arrêter le dispositif de combustion 1.

## Mode de fonctionnement M1- « combustion classique » - Figure 2

Dans ce mode de fonctionnement, la vanne V1 d'alimentation en dioxygène provenant de la source 30 et la vanne de recyclage V2 ont été fermées (F) par l'unité de commande 7. Seule la vanne d'évacuation V3 est ouverte (O).
Le ventilateur 10 (ou compresseur) du dispositif de combustion 1 fonctionne en imposant à l'entrée du dispositif de combustion 1 un débit $\theta_{GC}$ de gaz comburant GC, qui peut varier.
Le mélangeur 31 n'est pas alimenté en dioxygène provenant de la source 30. Le mélangeur 31 est alimenté uniquement avec de l'air qui est aspiré dans l'air ambiant via la deuxième dérivation 6 et qui est acheminé jusqu'à l'entrée du mélangeur 31, dans la portion 40a de la boucle de recyclage 40 qui est en aval de la deuxième dérivation 6. Une combustion classique est ainsi réalisée dans l'installation de combustion 1 au moyen de cet air agissant comme gaz comburant.
Les fumées de combustion FC ne recirculent pas jusqu'au mélangeur 31 (vanne de recyclage V2 fermée) mais sont évacuées dans l'air ambiant en étant poussées par le ventilateur (ou compresseur) 10 dans la première dérivation 5 (vanne d'évacuation V3 ouverte).

## Mode de fonctionnement M2 - « oxycombustion avec recyclage » - Figures 3 et 4

Dans ce mode de fonctionnement, la vanne V1 d'alimentation en dioxygène provenant de la source 30 et la vanne de recyclage V2 ont été ouvertes (O) par l'unité de commande 7. La vanne d'évacuation V3 est ouverte (O) (totalement ou partiellement - Figure 3) ou est fermée (F) (figure 4).
Le ventilateur 10 (ou compresseur) de l'installation de combustion fonctionne en imposant à l'entrée de l'installation 1 un débit donné ($\theta_{GC}$) de gaz comburant GC qui peut varier.
Ce mode de fonctionnement M2 comporte deux phases de fonctionnement :

- une phase de fonctionnement dite « oxycombustion dégradée », qui est illustrée sur la figure 3.
- une phase de fonctionnement dite « oxycombustion améliorée » illustrée sur la figure 4

## Phase de fonctionnement de la figure 3 - « oxycombustion dégradée »

Une partie des fumées de combustion FC en sortie du dispositif de combustion 1 sont évacuées dans l'air ambiant (vanne d'évacuation V3 ouverte au moins partiellement) et une autre partie en sortie du dispositif de combustion 1 est recyclée dans la boucle de recyclage 40 (vanne de recyclage V2 ouverte) jusqu'à l'entrée du condenseur 8.

En passant dans le condenseur 8, les fumées de combustion FC qui sont recyclées sont refroidies et déshumidifiées par condensation de la vapeur d'eau présente dans ces fumées de combustion FC.

En sortie du condenseur 8, on obtient un gaz de combustion G déshumidifié contenant les produits de combustion en phase gazeuse produits par la combustion dans le dispositif de combustion 1, et ayant une humidité absolue inférieure à celle des fumées de combustion FC à l'entrée du condenseur 8.

Le mélangeur 31 est alimenté en gaz riche en dioxygène provenant de la source 30 (vanne V1 ouverte) avec un débit ($\theta O_2$) et est alimenté avec le gaz de combustion G déshumidifié avec un débit $\theta$.

Le mélangeur 31 est également alimenté avec de l'air qui est aspiré dans l'air ambiant, via la deuxième dérivation 6, avec un débit d'air entrant $\theta_{AIR}$ et qui est acheminé jusqu'au mélangeur 31, via la portion 40a de la boucle de recyclage 40 en aval de la dérivation 6, en même temps que le gaz de combustion G déshumidifié.

En fonctionnement : $\theta_{GC} = \theta O_2 + \theta + \theta_{AIR}$

Cette phase de fonctionnement perdure tant que la vanne d'évacuation V3 n'est pas totalement fermée.

Dans cette phase de fonctionnement, le gaz comburant GC contient du dioxygène provenant du gaz riche en dioxygène fourni par la source 30, le gaz de combustion G recyclé et de l'air.

Dans cette phase de fonctionnement, lorsque le débit $\theta O_2$ de gaz riche en dioxygène à l'entrée du mélangeur 31 augmente et/ou lorsque le débit $\theta$ du gaz de combustion G recyclé à l'entrée du mélangeur 31 augmente, le débit d'air $\theta_{AIR}$ aspiré dans la deuxième dérivation 6 diminue automatiquement. Inversement lorsque le débit $\theta O_2$ de gaz riche en dioxygène à l'entrée du mélangeur 31 diminue et/ou lorsque le débit $\theta$ du gaz de combustion G recyclé à l'entrée du mélangeur 31 diminue le débit d'air $\theta_{AIR}$ aspiré dans la deuxième dérivation 6 augmente automatiquement.

Phase de fonctionnement de la figure 4 - « oxycombustion améliorée »

Dans cette phase de fonctionnement, la vanne V1 d'alimentation en dioxygène provenant de la source 30 et la vanne de recyclage V2 sont ouvertes (O) et la vanne d'évacuation V3 est fermée (F).

Les fumées de combustion FC en sortie du dispositif de combustion 1 ne sont pas évacuées dans l'air ambiant à travers la vanne d'évacuation V3 fermée mais sont recyclées dans la boucle de recyclage 40 (vanne de recyclage V2 ouverte) jusqu'à l'entrée du condenseur 8 et sont déshumidifiées en passant dans le condenseur 8.

Dans cette phase de fonctionnement, le mélangeur 31 est alimenté en dioxygène provenant du gaz riche en dioxygène de la source 30 (vanne V1 ouverte) avec un débit donné ($\theta O_2$) et est alimenté avec un débit $\theta 1$ avec une partie G1 du gaz de combustion G sortant du condenseur 8 ; l'autre partie excédentaire G2 du gaz de combustion G sortant du condenseur 8 est évacuée à l'air libre avec un débit $\theta 2$ en passant à travers la deuxième dérivation 6.

En fonctionnement :

$$\theta = \theta 1 + \theta 2$$

$$\theta_{GC} = \theta O_2 + \theta_1$$

Lorsque le débit $\theta O_2$ de gaz riche en dioxygène à l'entrée du mélangeur 31 est augmenté, le débit $\theta_1$ de la partie recyclée G1 du gaz de combustion G diminue automatiquement et lorsque le débit $\theta O_2$ de gaz riche en dioxygène à l'entrée du mélangeur 31 est diminué, le débit $\theta_1$ de la partie recyclée G1 du gaz de combustion G augmente automatiquement.

Le gaz comburant GC contient ainsi du dioxygène provenant du gaz riche en dioxygène de la source 30 et la partie recyclée G1 du gaz de combustion G.

De manière avantageuse, le passage de la phase de fonctionnement « oxycombustion dégradée » (vanne V3 au moins partiellement ouverte) à la phase de fonctionnement « oxycombustion améliorée » (vanne V3 fermée) ou inversement peut être réalisé sans devoir mettre le dispositif de combustion 1 à l'arrêt et sans devoir stopper la combustion dans le dispositif de combustion 1.

De préférence, dans le mode fonctionnement M2, l'unité de commande 7 régule automatiquement le débit $\theta O_2$ de gaz riche en dioxygène (par exemple en fermant plus ou moins la vanne V1) de telle sorte que la concentration en dioxygène mesurée par le capteur 33 dans le gaz comburant GC est égale ou supérieure à une consigne de fonctionnement donnée ou est dans une plage de fonctionnement donnée. Ceci permet au système de s'adapter automatiquement aux variations de débit $\theta_{GC}$ de gaz comburant GC (imposées par le dispositif de combustion1), en maintenant une concentration appropriée de dioxygène $O_2$ dans le gaz comburant GC.

Le système de combustion de la figure 1 peut notamment, mais pas exclusivement, fonctionner avec un combustible C produisant dans la phase de fonctionnement « oxycombustion améliorée » des fumées de combustion FC qui contiennent principalement du dioxyde de carbone ($CO_2$) et de la vapeur d'eau ($H_2O$), et dans une moindre mesure du dioxygène ($O_2$) et de l'oxyde de carbone (CO).

Ainsi, de manière non limitative et non exhaustive, le combustible C utilisé dans le système de combustion de la figure 1 peut avantageusement être un hydrocarbure de tout type, et par exemple un hydrocarbure conventionnel issu du pétrole ou gaz naturel ou un hydrocarbure non conventionnel issu du gaz ou pétrole de schiste, des schistes ou sables bitumeux, du gaz de houille, du biogaz, du singaz, etc.

Par exemple, lorsque le combustible C est un hydrocarbure saturé de type alcane ($C_nH_{2n+2}$), la réaction d'oxycombustion dans l'installation est de manière connue :

$$C_nH_{2n+2} + (3n+1)/2 \; O_2 \rightarrow nCO_2 + (n+1)H_2O \text{ - Energie (kJ/mole de } C_nH_{2n+2})$$

Le combustible peut être également un combustible notamment solide ou liquide issu de l'extraction (charbon, bois,...) ou peut comporter des déchets (plastiques, matériaux de récupération, ...)

Le recyclage à l'entrée du mélangeur 31 du gaz de combustion contenant du $CO_2$ permet de manière connue en soi, de mieux contrôler la réaction d'oxycombustion dans le dispositif de combustion 1 et d'abaisser significativement la température de combustion dans ce dispositif de combustion 1, comparativement à une réaction d'oxycombustion qui serait réalisée à partir uniquement ou essentiellement de dioxygène pur comme comburant.

Différents cas de fonctionnement du système de combustion de la figure 1 vont à présent être détaillés.

<u>Exemple de pilotage du système de combustion pour passer du mode de fonctionnement M1 (« combustion classique ») au mode de fonctionnement M2 (« oxycombustion avec recyclage »)</u>

On suppose que le système de combustion est configuré en mode de fonctionnement M1 (« combustion classique » - Figure 2), la vanne V1 d'alimentation en dioxygène et la vanne de recyclage V2 ayant été fermées (F) par l'unité de commande 7, et seule la vanne d'évacuation V3 est ouverte (O).

L'installation de combustion 1 fonctionne, le ventilateur 10 (ou compresseur) de l'installation de combustion 1 imposant un débit donné ($\theta_{GC}$) de gaz comburant GC constitué d'air à l'entrée de l'installation 1.

Pour passer de ce mode de fonctionnement M1 (combustion classique) au mode de fonctionnement M2 (« oxycombustion avec recyclage »), l'unité de commande 7 commande, de préférence de manière séquentielle, l'ouverture, de préférence de manière progressive, de la vanne V1 d'alimentation en dioxygène, l'ouverture, de préférence de manière progressive, de la vanne de recyclage V2, et la fermeture totale ou partielle, de préférence de manière progressive, de la vanne d'évacuation V3.

Le système de combustion bascule ainsi dans le mode de fonctionnement M2 (« oxycombustion avec recyclage »)

Tant que la vanne d'évacuation V3 n'est pas totalement fermée, le système de combustion est dans la phase de fonctionnement dite « oxycombustion dégradée » (figure 3), précédemment décrite. La concentration en dioxygène dans le gaz comburant GC augmente dans le temps pendant que dans le même temps la concentration en air dans le gaz comburant diminue, l'air étant remplacé par le dioxygène. Le système de combustion peut avantageusement fonctionner sans limite de temps dans le mode de fonctionnement M2 (« oxycombustion avec recyclage ») et dans ladite phase « oxycombustion dégradée » avec une entrée partielle de l'air au moins par l'ouverture 6, et éventuellement par une autre entrée d'air secondaire, et un rejet partiel des fumées FC via la dérivation 5 ou une autre sortie partielle des fumées FC.

Lorsque la vanne d'évacuation V3 est totalement fermée et lorsque la somme ($\theta_{O_2} + \theta$) du débit de dioxygène $\theta_{O_2}$ et du débit $\theta$ du gaz de combustion G devient supérieure au débit du gaz comburant $\theta_{GC}$ imposé par l'installation de combustion 1, le système de combustion bascule automatiquement dans la phase de fonctionnement dite « oxycombustion améliorée » (Figure 4).

De préférence, lorsque le système de combustion a basculé dans le mode de fonctionnement M2 (« oxycombustion avec recyclage »), l'unité de commande 7 régule automatiquement le débit $\theta_{O_2}$ de dioxygène (par exemple dans ce cas particulier en fermant plus ou moins la vanne progressive V1) en utilisant le signal de mesure S de la concentration en dioxygène dans le gaz comburant G.

Le passage du mode de fonctionnement M1 (« combustion classique ») au mode de fonctionnement M2 (« oxycombustion avec recyclage ») est simple et sécurisé, les risques de montée en température intempestive et non contrôlée du dispositif de combustion 1 étant évités. Le passage du mode de fonctionnement M1 (« combustion classique ») au mode de fonctionnement M2 (« oxycombustion avec recyclage ») ne nécessite avantageusement aucune intervention de l'utilisateur sur le dispositif de combustion 1 et surtout ne nécessite pas de stopper la combustion.

Le passage du mode de fonctionnement M1 au mode de fonctionnement M2 (« oxycombustion avec recyclage), en phase de « oxycombustion dégradée » ou en phase de fonctionnement « oxycombustion améliorée », peut être demandé à l'unité de commande 7, à l'initiative de l'utilisateur du système de combustion, au moyen par exemple d'une commande manuelle de changement de mode de fonctionnement.

Le passage du mode de fonctionnement M1 au mode de fonctionnement M2 peut également être mis en œuvre lors du démarrage du système de combustion en vue de le faire fonctionner en « oxycombustion avec recyclage » (M2).

Procédure de démarrage du système de combustion

Lorsqu'un utilisateur souhaite démarrer le système de combustion en vue de le faire fonctionner en « oxycombustion avec recyclage » (M2), il demande à l'unité de commande 7, au moyen d'une commande appropriée, d'exécuter une procédure de démarrage.

L'unité de commande 7 exécute cette procédure de démarrage en configurant dans un premier temps le système de combustion en mode de fonctionnement M1 (« combustion classique »).

Puis le dispositif de combustion 1 est démarré, notamment en mettant en fonctionnement au moins le ventilateur (ou compresseur 10) du dispositif de combustion 1, soit manuellement par l'utilisateur, soit de manière automatisée par exemple par l'unité de commande 7, ce qui permet dans un premier temps de faire fonctionner le système en combustion classique (M1).

Ensuite, dans un deuxième temps, l'unité de commande 7 pilote le système de combustion, de manière à basculer automatiquement en « oxycombustion avec recyclage » (M2), tel que précédemment décrit, en choisissant la phase de fonctionnement dite « oxycombustion dégradée » ou en fermant totalement la vanne d'évacuation V3 et en augmentant le débit $\theta O_2$ de gaz riche en dioxygène fourni par la source 30 jusqu'à atteindre la phase de fonctionnement dite « oxycombustion améliorée ».

Une telle phase de démarrage est avantageusement simple et sécurisée. En particulier, comparativement à un système de combustion de l'art antérieur qui est adapté pour fonctionner uniquement en mode d'oxycombustion améliorée avec recyclage du gaz de combustion, on évite pendant la phase de démarrage les risques de montée en température intempestive et non contrôlée, qui sont inhérents dans ce type d'installation de l'art antérieur du fait d'une concentration initiale de dioxygène importante dans le gaz comburant et d'une concentration initiale de $CO_2$ faible.

Exemple de pilotage du système de combustion pour passer du mode de fonctionnement M2 (« oxycombustion avec recyclage ») au mode de fonctionnement M1 (« combustion classique »)

On suppose que le système de combustion est configuré en mode de fonctionnement M2 (« oxycombustion avec recyclage »), la vanne V1 d'alimentation en dioxygène et la vanne de recyclage V2 ayant étant ouvertes (O) par l'unité de commande 7, et la vanne d'évacuation V3 étant au moins partiellement ouverte ou étant fermée (F).

Le dispositif de combustion 1 fonctionne, le ventilateur 10 (ou compresseur) de l'installation de combustion 1 imposant un débit donné ($\theta_{GC}$) de gaz comburant GC constitué d'air à l'entrée de l'installation 1.

Pour passer de ce mode de fonctionnement M2 (« oxycombustion avec recyclage ») au mode de fonctionnement M1 (« combustion classique »), l'unité de commande 7 commande dans un premier temps l'ouverture totale de la vanne d'évacuation V3, de préférence de manière progressive en maintenant le contrôle du taux de l'oxygène dans le gaz comburant GC grâce à la vanne V1, ce qui permet de maintenir la combustion et permet l'évacuation de l'excès du gaz de combustion vers l'extérieur. La dérivation 6 permet l'apport d'air extérieur ou évacuer le surplus du gaz de combustion selon le besoin du dispositif de combustion 1. Puis dans un deuxième temps, une fois que l'ouverture de la vanne V3 est achevée, l'unité de commande 7 commande la fermeture de la vanne de recyclage V2, de préférence de manière progressive, ce qui permet d'empêcher le rebouclage du gaz de combustion vers l'entrée du mélangeur 31. Une fois que la fermeture de la vanne V2 est achevée, l'unité de commande 7 commande la fermeture de la vanne V1 d'alimentation en dioxygène, de préférence de manière progressive, ce qui permet d'empêcher l'injection de gaz riche en dioxygène (fourni par la source 30) dans le gaz comburant GC et de faire basculer le système de combustion en « combustion classique » (M1).

En variante, la fermeture de la vanne V1 d'alimentation en dioxygène et la fermeture de la vanne de recyclage V2 peuvent être commandées en même temps par l'unité de commande 7.

En variante, l'ouverture de la vanne d'évacuation V3, la fermeture de la vanne V1 d'alimentation en dioxygène et la fermeture de la vanne de recyclage V2 ne sont pas forcément séquentielles mais peuvent être commandées en même temps par l'unité de commande 7.

Le passage du mode de fonctionnement M2 (« oxycombustion avec recyclage ») au mode de fonctionnement M1 (« combustion classique ») est simple et sécurisé, les risques de montée en température intempestive et non contrôlée de l'installation de combustion 1 étant évités. Le passage du mode de fonctionnement M2 (« oxycombustion avec recyclage ») au mode de fonctionnement M1 (« combustion classique ») ne nécessite avantageusement aucune intervention de l'utilisateur sur le dispositif de combustion 1 et surtout ne nécessite pas de stopper la combustion.

Le passage du mode de fonctionnement M2 au mode de fonctionnement M1 peut être demandé à l'unité de commande 7, à l'initiative de l'utilisateur du système de combustion, au moyen par exemple d'une commande manuelle de changement de mode de fonctionnement.

Le passage du mode de fonctionnement M2 au mode de fonctionnement M1 peut également être mis en œuvre lors d'une procédure d'arrêt du fonctionnement du système de combustion.

Procédure d'arrêt du système de combustion

Lorsqu'un utilisateur souhaite arrêter le système de combustion alors que celui-ci fonctionne en « oxycombustion avec recyclage » (M2), il demande à l'unité de commande 7, au moyen d'une commande appropriée, d'exécuter une procédure d'arrêt.

L'unité de commande 7 exécute cette procédure d'arrêt en commandant le dispositif 32 de contrôle de débit de gaz riche en dioxygène, la vanne V3 et la vanne V2 tel que précédemment décrit (passage du mode de fonctionnement M2 au mode de fonctionnement M1).

Une fois que le système de combustion est configuré dans ce mode de fonctionnement M1 (« oxycombustion classique »), le dispositif de combustion 1 peut être mis à l'arrêt de manière classique sans encourir aucun risque.

Une telle phase d'arrêt est avantageusement simple et sécurisée. En particulier, comparativement à un système de combustion de l'art antérieur qui est adapté pour fonctionner uniquement en oxycombustion avec recyclage du gaz de combustion, on évite pendant la phase d'arrêt les risques de montée en température intempestive et non contrôlée, qui sont inhérents dans ce type d'installation de l'art antérieur.

Le passage du mode de fonctionnement M2 au mode de fonctionnement M1 peut également être mis en œuvre lorsque la concentration de dioxygène (fourni par la source 30) dans le gaz comburant GC devient insuffisante et ne permet plus une oxycombustion améliorée avec recyclage du gaz de combustion.

Cette insuffisance peut avoir plusieurs causes éventuellement cumulatives.

Il peut arriver par exemple qu'au cours du fonctionnement du système de combustion en mode de fonctionnement M2 (« oxycombustion avec recyclage »), et notamment dans la phase de fonctionnement « oxycombustion améliorée »), une interruption accidentelle de l'alimentation en dioxygène se produise, par exemple du fait d'un arrêt intempestif de la production in situ de gaz riche en dioxygène par la source 30 ou d'une source 30 de gaz riche en dioxygène qui est vide.

Il peut arriver par exemple qu'au cours du fonctionnement du système de combustion en mode de fonctionnement M2 (« oxycombustion avec recyclage »), et notamment dans la phase de fonctionnement « oxycombustion améliorée »), que l'alimentation en dioxygène diminue de manière trop importante, par exemple du fait d'un ralentissement intempestif de la production in situ de gaz riche en dioxygène par la source 30 ou d'une trop faible pression dans la source 30.

Il peut arriver par exemple qu'au cours du fonctionnement du système de combustion en mode de fonctionnement M2 (« oxycombustion avec recyclage » et notamment dans la phase de fonctionnement « oxycombustion améliorée », que le dispositif de combustion 1 soit sollicité pour fournir plus d'énergie thermique et pour y répondre augmente le débit $\theta_{GC}$ (augmentation du débit du ventilateur ou compresseur 10) en gaz comburant GC. Dans ce cas le complément de gaz comburant est automatiquement injecté à travers la deuxième dérivation 6.

Si le dispositif de combustion 1 diminue la fourniture d'énergie thermique, ce qui se traduit par une baisse du besoin du gaz comburant GC, l'excès du gaz comburant est rejeté via la dérivation 6 et le système de commande 7 règle le cas échéant la vanne V1 pour réduire l'injection du dioxygène dans le mélangeur 31.

Dans une installation traditionnelle apte à fonctionner uniquement en oxycombustion avec recyclage du gaz de combustion, une baisse trop importante de la concentration en dioxygène dans le gaz comburant GC peut occasionner de manière préjudiciable un arrêt intempestif de l'oxycombustion.

Un tel arrêt intempestif peut avantageusement être évité au moyen du système de combustion de l'invention.

A cet effet, l'unité de commande 7 est de préférence conçue pour surveiller, au moyen du capteur 33, la concentration en dioxygène dans le gaz comburant GC et lorsque la concentration en dioxygène diminue, pour détecter automatiquement si cette concentration en dioxygène atteint un seuil minimum critique prédéfini et de préférence paramétrable, et dans l'affirmative pour commander automatiquement le système de combustion, de manière à le faire basculer (tel que précédemment décrit) en toute sécurité en mode de fonctionnement M1 (« combustion classique »), sans stopper la combustion dans le dispositif de combustion 1.

D'autres exemples non exhaustifs de système de combustion conformes à l'invention et pouvant fonctionner dans les modes de fonctionnement M1 (« combustion classique ») et M2 (« combustion avec recyclage ») vont à présent être décrits.

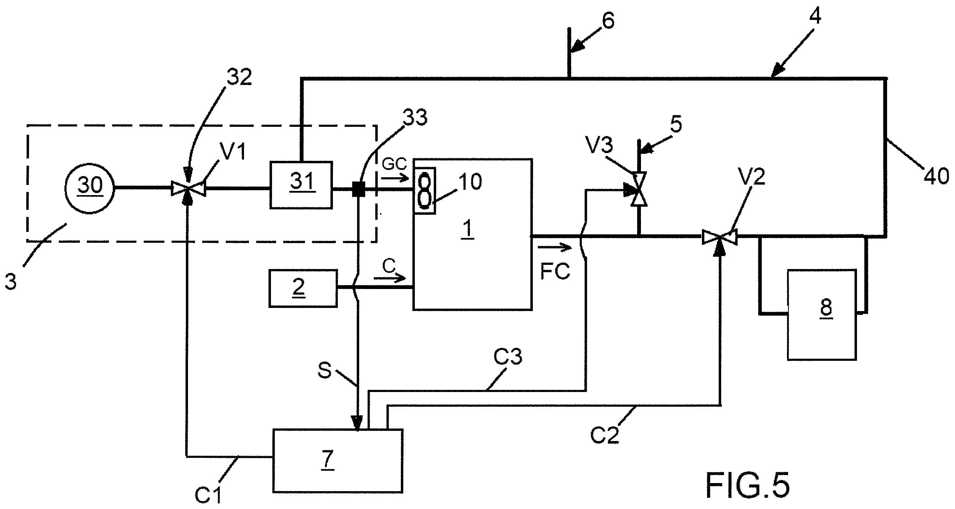

Système de combustion de la figure 5 - condenseur 8 en « by-pass »

Le système de combustion de la figure 5 se différencie de celui de la figure 1 en ce que le condenseur 8 est monté en dérivation (« by-pass ») sur la boucle de recyclage 40.

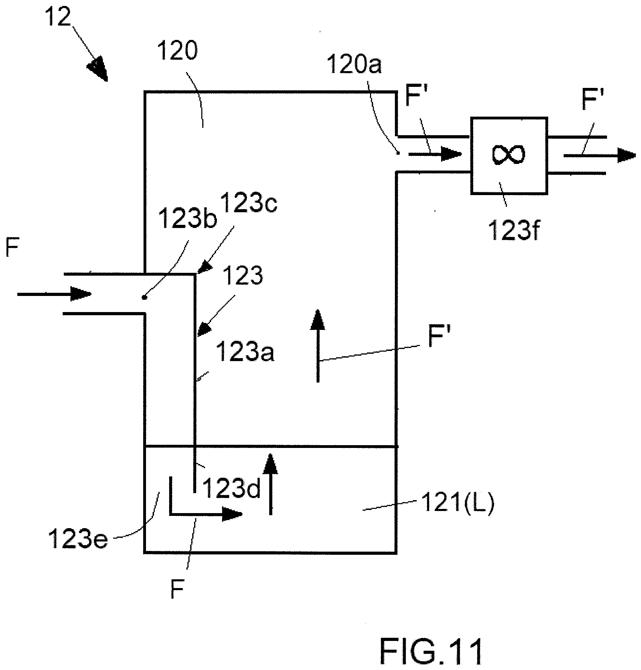

Ce type de montage est de manière connue adapté pour les condenseurs 8, qui possèdent leur propre ventilateur ou compresseur, tel que par exemple celui décrit ultérieurement en référence à la figure 11. Les explications qui ont été données précédemment sur le fonctionnement du système de combustion de la figure 1 s'appliquent également à ce système de combustion de la figure 5.

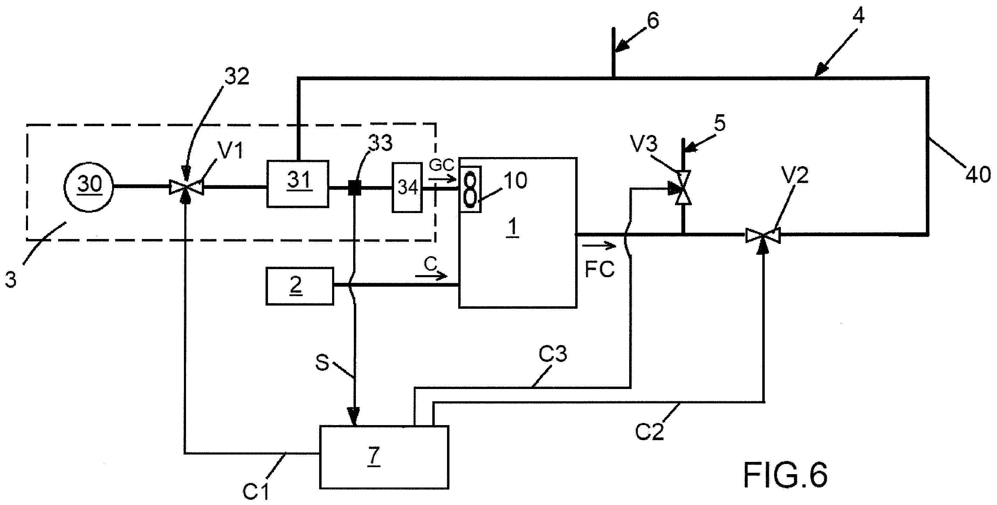

Système de combustion de la figure 6 - condenseur 34 en aval du mélangeur 31

Le système de combustion de la figure 6 se différencie de celui de la figure 1 en ce que le condenseur 8 a été remplacé par un condenseur 34, qui est alimenté en entrée par le mélangeur 31 et qui est raccordé en sortie au dispositif de combustion 1 et alimente le dispositif de combustion 1 avec le gaz comburant GC.

Dans cette variante, lorsque la vanne V2 est ouverte et que le système de combustion est en mode de fonctionnement M2 (« oxycombustion avec recyclage »), les fumées de combustion FC sont recyclées jusqu'au mélangeur 31 sans avoir été déshumidifiées, la déshumidification étant réalisée par le condenseur 34.

Dans une autre variante, le condenseur 34 pourrait être monté en « by-pass » comme le condenseur 8 de la figure 5.

Dans une autre variante, le système de combustion pourrait comporter le condenseur 8 en amont du mélangeur 31 et le condenseur 34 en aval du mélangeur 31.

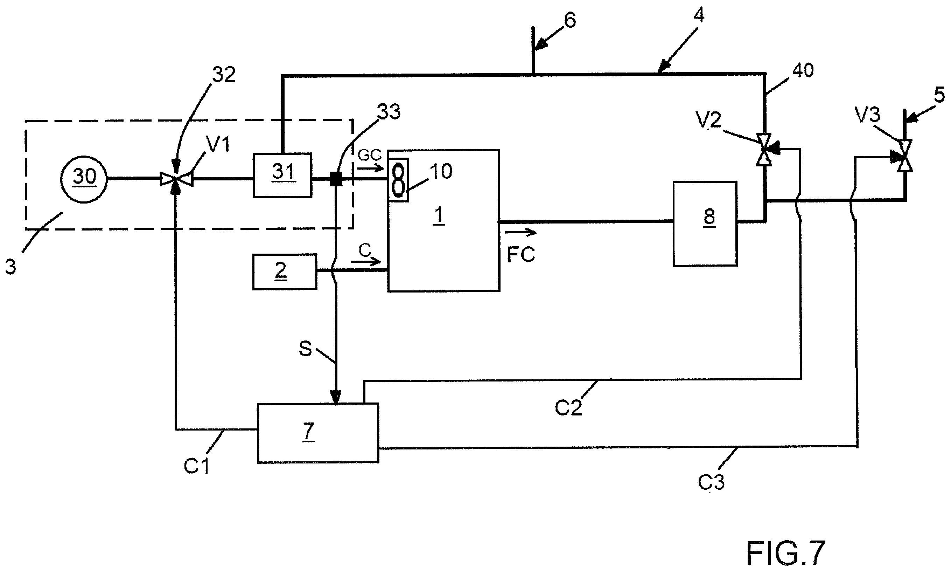

Système de combustion de la figure 7 - position des vannes V2 et V3 après le condenseur 8

Le système de combustion de la figure 7 se différencie de celui de la figure 1 en ce que la vanne de recyclage V2 et la première dérivation 5 comportant la vanne d'évacuation V3 sont raccordées à la boucle de recyclage 40 en aval du condenseur 8. Dans cette configuration, le condenseur 8 est utilisé dans les deux modes de fonctionnement M1 et M2.

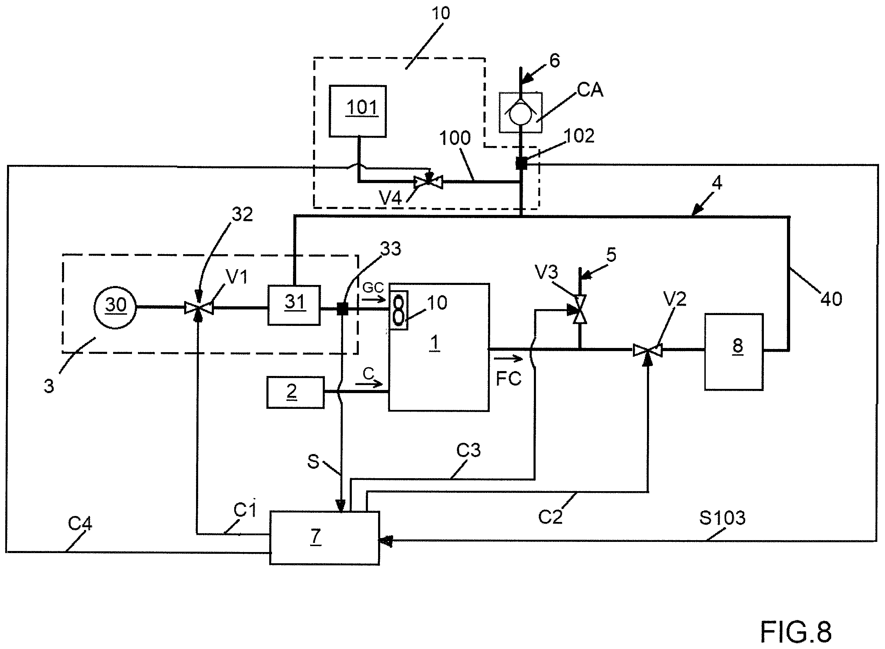

Système de combustion de la figure 8 - captage du $CO_2$

Le système combustion de la figure 8 se différencie de celui de la figure 1 en ce qu'il comporte un dispositif 10 additionnel de captage de $CO_2$, qui est adapté pour fonctionner lorsque le système de combustion fonctionne en mode M2 (« oxycombustion avec recyclage ») et dans la phase « oxycombustion améliorée ».

Ce dispositif 10 comporte par exemple une unité 101 de captage de $CO_2$, une dérivation 100 qui raccorde l'unité 101 de captage de $CO_2$ à la deuxième dérivation 6, une vanne V4 qui est montée sur la dérivation 100 et qui est commandée par l'unité de commande 7 au moyen d'un signal de commande C4, et un capteur 102 détectant le sens de circulation du fluide gazeux dans la deuxième dérivation 6 et délivrant un signal de détection $S_{103}$ à destination de l'unité de commande 7. Le dispositif 10 peut également comporter un ventilateur ou compresseur permettant d'aspirer du gaz de combustion circulant dans la deuxième dérivation 6.

La deuxième dérivation 6 est équipée d'un clapet antiretour CA réglable, qui permet de laisser passer librement un fluide gazeux (en l'occurrence de l'air) dans la deuxième dérivation 6 dans un sens depuis l'extérieur (air ambiant) vers l'intérieur de la dérivation 6 et qui est réglable ou piloté par l'unité de commande 7 de manière à restreindre l'écoulement d'un fluide gazeux dans le sens opposé ou qui est réglable ou piloté par l'unité de commande 7 de manière à bloquer l'écoulement d'un fluide gazeux dans le sens opposé, lorsque la pression retour dans la deuxième dérivation 6 est supérieure à une pression prédéfinie.

Lorsque le système de combustion est dans le premier mode de fonctionnement M1, ainsi que dans la phase (« oxycombustion dégradée ») du deuxième mode de fonctionnement M2, la vanne V4 est fermée et le clapet antiretour CA laisse l'air en provenance de l'extérieur dans la deuxième dérivation 6 et dans la boucle de recyclage 40 jusqu'à mélangeur 31.

Lorsque le système de combustion bascule en mode M2 (« oxycombustion avec recyclage ») et dans la phase « oxycombustion améliorée », le capteur 102 détecte le changement de sens de circulation du fluide gazeux du fait de l'échappement de gaz de combustion G2 dans la deuxième dérivation 6 et l'unité de commande 7 commande automatiquement l'ouverture de la vanne V4, ce qui a pour effet d'alimenter l'unité 101 de captage de $CO_2$ avec tout ou partie du gaz de combustion G2 qui s'échappe de la boucle de recyclage 40 en pénétrant dans la deuxième dérivation 6. Pendant cette phase, le clapet anti-retour CA bloque ou limite le passage du gaz de combustion jusqu'à la sortie à l'air libre de la deuxième dérivation 6.

Lorsque le système de combustion quitte la phase « oxycombustion améliorée » pour entrer dans la phase transitoire (« oxycombustion dégradée"), le capteur 102 détecte le changement de sens de circulation du fluide gazeux du fait de l'aspiration d'air dans la deuxième dérivation 6 et l'unité de commande 7 commande automatiquement la fermeture de la vanne V4.

Ce dispositif 10 de captage de $CO_2$ peut également être ajouté dans le système de combustion des figures 5 à 7, 9 et 10.

Dans une autre variante, le dispositif de captage de CO2 peut être monté sur la boucle de recyclage 40 entre la première dérivation 5 et la deuxième dérivation 6 et est enclenché par l'unité de commande 7 lorsque le sens de circulation de fluide gazeux dans la dérivation 6 est vers l'extérieur.

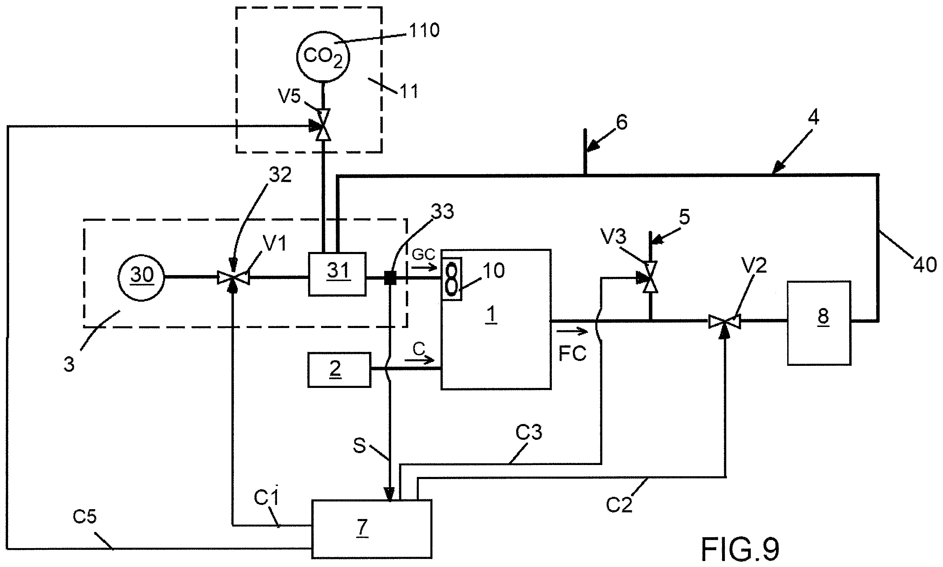

Système de combustion de la figure 9 - injection de CO₂ au démarrage

Le système combustion de la figure 9 se différencie de celui de la figure 1 en ce qu'il comporte un dispositif 11 additionnel raccordé à une entrée du mélangeur 31 et permettant d'injecter du dioxyde de carbone ($CO_2$) gazeux dans le mélangeur 31 pendant la phase transitoire « oxycombustion dégradée » lors du passage du deuxième mode de fonctionnement M2 en phase « oxycombustion dégradée » au deuxième mode de fonctionnement M2 en phase « oxycombustion améliorée », afin de raccourcir la durée de cette phase transitoire.

Ce dispositif 11 d'injection de $CO_2$ comporte par exemple une source 110 de CO2 gazeux sous pression associée à une vanne V5 commandée par l'unité de commande 7 au moyen d'un signal de commande C5.

Ce dispositif 11 d'injection de $CO_2$ peut également être ajouté dans le système de combustion des figures 5 à 8 et 10.

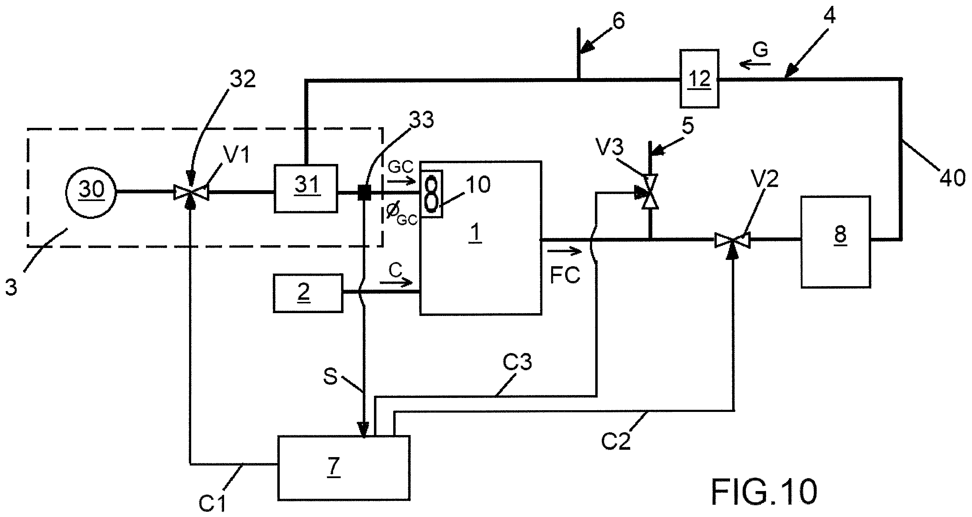

Système de combustion de la figure 10 - dispositif de dépollution 12

Le système combustion de la figure 10 se différencie de celui de la figure 1 en ce qu'il comporte au moins un dispositif de dépollution 12 (connu en soi) monté sur la boucle de recyclage 40 et adapté pour capter, dans le gaz de combustion circulant dans la boucle de recyclage 40, un ou plusieurs polluants choisis parmi la liste suivante : particules fines, SOx, NOx, acides, métaux lourds, ammoniac, COV.

Tel qu'illustré sur la figure 10, ce dispositif de dépollution 12 est de préférence monté en amont de la deuxième dérivation 6. Il peut néanmoins également être monté entre la dérivation 6 et le mélangeur 31.

Ce dispositif de dépollution 12 peut également être ajouté dans le système de combustion des figures 5 à 9.

Exemple particulier de condenseur - Figure 11

On a représenté sur la figure 11, à titre uniquement d'exemple non limitatif de l'invention, un exemple préféré de condenseur pouvant être utilisé comme condenseur dans le système de combustion de l'invention, en particulier comme condenseur 8 ou 34 en étant monté en « by-pass ».

Ce condenseur comporte un échangeur 12, qui comprend une enceinte 120 contenant un bain 121 de liquide refroidissant L et des moyens d'injection 123, qui sont adaptés pour introduire le fluide gazeux F à déshumidifier (i.e. fumées de combustion FC pour les variantes des figures 1 à 5 et 7 à 10 ou gaz de combustion en sortie du mélangeur 31 pour la variante de la figure 6) au-dessous de la surface du bain de liquide refroidissant L.

Le liquide refroidissant L peut être simplement de l'eau ou une solution aqueuse.

Ces moyens d'injection 123 peuvent plus particulièrement comporter un ventilateur ou compresseur 123f et un conduit d'injection 123a comportant une ouverture d'admission 123b, par exemple dans sa partie supérieure 123c. La partie inférieure 123d du conduit d'injection 123a est plongée dans le bain 121 de liquide refroidissant L et comporte une ouverture d'évacuation 123e immergée dans le bain 121 de liquide refroidissant L.

En fonctionnement, le ventilateur ou compresseur 123f permet d'aspirer le fluide gazeux F à déshumidifier (i.e. fumées de combustion FC pour les variantes des figures 1 à 5 et 7 à 10 ou gaz de combustion en sortie du mélangeur 31 pour la variante de la figure 6) et de l'introduire dans le conduit d'injection 123 par l'ouverture d'admission 123b. Ce fluide gazeux F s'échappe du conduit d'injection 123 par l'ouverture d'évacuation 123e, et est de ce fait introduit de manière forcée dans le bain 121 de liquide refroidissant L, au-dessous de la surface du bain 121 de liquide refroidissant L, remonte vers la surface du bain de liquide, s'échappe de l'enceinte 120 par l'ouverture d'évacuation 120a de l'enceinte 120 après avoir été déshumidifié sous la forme d'un gaz déshumidifié F'.

La température $T_L$ du liquide refroidissant L est toujours inférieure à la température $T_F$ du fluide gazeux F à l'entrée de l'échangeur 12 et est de préférence inférieure à la température de rosée (point de rosée) du fluide gazeux F.

On rappellera que l'humidité absolue ($g_{eau}/kg_{airsec}$) d'un gaz représente le nombre de grammes de vapeur d'eau présents dans un volume de gaz donné, rapporté à la masse de gaz sec de ce volume exprimé en kilogramme. Sa valeur reste constante même si la température du gaz varie en restant toutefois supérieure au point de rosée du gaz.

Lors de leur passage à travers le bain 121 de liquide refroidissant L, le fluide gazeux F subit une condensation au contact du liquide refroidissant L, de sorte que l'humidité absolue du gaz F', en sortie de l'échangeur 12 est inférieure à l'humidité absolue du fluide gazeux F à l'entrée de l'échangeur 12.

L'écart entre l'humidité absolue du gaz déshumidifié F' et l'humidité absolue du fluide gazeux F entrant dépend notamment de l'écart entre la température $T_F$ du fluide gazeux F entrant et la température $T_L$ plus basse du liquide refroidissant L. Plus l'écart en température $\Delta T$ ($\Delta T = T_F - T_L$) entre la température $T_{F\,du}$ fluide gazeux F entrant et la température $T_L$ du liquide refroidissant L est important, et plus l'humidité absolue du gaz déshumidifié F' sera faible par rapport à l'humidité absolue du fluide gazeux F entrant.

Dans une autre variante, le ventilateur ou compresseur 123f peut être raccordé au conduit d'injection 123 et utilisé de manière à introduire le fluide gazeux F dans ce conduit d'injection 123 en les soufflant à travers l'ouverture d'admission 123b de ce conduit d'injection 123.

L'échangeur 12 peut plus particulièrement être couplé à une pompe à chaleur (non représentée) qui permet de renouveler le liquide L dans le bain en y prélevant des calories de manière à maintenir la température de ce liquide un niveau suffisamment bas.

Dans une autre variante de réalisation, le condenseur peut comporter plusieurs échangeurs 12 montés en cascade.

L'invention n'est pas limitée à la mise en œuvre d'un échangeur 12 du type de celui de la figure 11. Dans d'autres variantes de réalisation, l'échangeur 12 pour la condensation du fluide gazeux F peut par exemple être du type de celui décrit dans la demande de brevet internationale WO2016/071648 ou dans la demande de brevet internationale WO2020/030419 ou peut être un échangeur fonctionnant par pulvérisation du liquide refroidissant L au contact du fluide gazeux F.

L'invention n'est pas limitée à un échangeur fonctionnant avec un liquide refroidissant mais peut être mise en œuvre avec tout autre type connu d'échangeur permettant une déshumidification d'un fluide gazeux.

Avantage de la mise en œuvre du gaz riche en dioxygène combinée à un rebouclage d'au moins une partie des fumées de combustion

Dans le cas d'une combustion classique, pour une quantité Qd de combustible C à bruler par heure, on utilise un débit D d'air comburant à l'entrée du dispositif de combustion. Après la combustion, on rejette avec un débit X des fumées de combustion qui doivent être traitées en respectant les normes de rejet sur les poussières et les produits chimiques. Plus X est grand, plus le coût de traitement des fumées de combustion est important.

En combustion classique, le débit d'air D (D<X) à l'entrée du dispositif de combustion est défini en fonction du besoin en oxygène pour la combustion et de la gestion du dispositif de combustion (par exemple gestion de la flame dans le foyer de combustion).

En combustion classique, les fumées de combustion contiennent :

- du dioxyde d'azote ($N_2$) avec quasiment le même débit massique que l'air comburant,
- du dioxyde de carbone ($CO_2$) issu de la combustion,
- de l'eau issue de la combustion et le cas échéant de l'évaporation de l'eau pouvant être contenue dans le combustible (par exemple lorsque le combustible est constitué de déchets ou de charbon) et de l'eau issue de l'air comburant,
- du dioxygène ($O_2$) qui n'a pas participé à la combustion
- de polluants qui dépendent du combustible utilisé et qui peuvent par exemple comporter des particules fines, des acides, Nox, SOx, des métaux lourds, de la dioxine, ...

Lorsque le système de combustion de l'invention fonctionne en *« oxycombustion »* tel que précédemment décrit [ajout du gaz riche en dioxygène contenant au moins 40% de $O_2$) avec rebouclage d'une partie des fumées de combustion], le débit des fumées de combustion en sortie du dispositif de combustion qui ne sont pas recyclées et qui sont rejetées directement dans l'atmosphère et/ou qui sont traitées (par exemple pour le captage de $CO_2$) avant rejet dans l'atmosphère est avantageusement plus faible que le débit X susvisé.

Plus la fraction en $O_2$ dans le gaz riche en dioxygène fourni par la source 30 est importante, et plus le débit des fumées de combustion qui ne sont pas recyclées et sont rejetées est faible

Par exemple, lorsque le gaz riche en dioxygène est du dioxygène pur, on peut en pratique recycler les fumées de combustion avec un débit de recyclage important pouvant atteindre 10/11 de X et rejeter le reste des fumées de combustion, avec un débit qui est avantageusement plus faible et qui peut être de l'ordre de 1/11 de X, soit directement dans l'atmosphère, soit en les traitant préalablement, par exemple afin de capter le $CO_2$, avant rejet dans l'atmosphère et/ou en les dépolluant.

Dans une autre variante de réalisation de l'invention, le mélangeur 31 peut comporter une entrée d'air additionnelle et/ou le dispositif de combustion peut comporter une entrée d'air additionnelle permettant d'injecter de l'air additionnel dans la combustion en plus des fumées de combustion recyclées et en plus du gaz riche en dioxygène. Cela aura un effet simplement sur le coefficient susvisé valant 11 qui sera dans ce cas compris entre 1 et 11 en fonction du débit d'air additionnel injecté dans la combustion via ladite entrée d'air additionnelle.

Lorsque le gaz riche en dioxygène contient 90% de dioxygène, on peut en pratique recycler les fumées de combustion avec un débit de recyclage important pouvant atteindre 9/10 de X et rejeter le reste des fumées de combustion, avec un débit qui est avantageusement plus faible et qui peut être de l'ordre de 1/10 de X, soit directement dans l'atmosphère, soit en les traitant préalablement, par exemple afin de capter le $CO_2$, avant rejet dans l'atmosphère et/ou en les dépolluant, etc.

Il convient de souligner que les contraintes sur la pollution du gaz comburant à l'entrée du dispositif de combustion sont moins importantes que les contraintes environnementales liées à la pollution des fumées de combustion non recyclées et qui sont de plus en plus drastiques. Selon le cas, on peut donc ne pas traiter les fumées de combustion recyclées ou éventuellement réaliser un traitement des fumés de combustion recyclées avant leur entrée dans le mélangeur qui est « léger » et nettement moins coûteux qu'un traitement des fumées non recyclées. Le coût total de traitement des fumées de combustion peut donc avantageusement être abaissé de manière importante.

En contrepartie de cette baisse importante du coût de traitement des fumées de combustion, la production du gaz riche en dioxygène induit un coût de fonctionnement additionnel, qui en pratique augmente avec la fraction de $O_2$ dans le gaz riche en dioxygène, mais qui reste en pratique nettement moins importante que le coût de traitement des fumées de combustion. Il revient donc à l'homme du métier d'adapter et de trouver un compromis au cas par cas entre le coût de production du gaz plus ou moins riche en dioxygène et le coût de traitement des fumées de combustion.

Dans le cadre de l'invention, le gaz riche en dioxygène contient au moins 40% de dioxygène (en dessous de ce seuil, la réduction du débit des fumées non recyclées est en pratique trop faible). De préférence, la fraction de dioxygène gazeux dans le gaz riche en dioxygène est d'au moins 80%, plus préférentiellement d'au moins 90%. Plus particulièrement le gaz riche en dioxygène est avantageusement du dioxygène gazeux pur ou quasi pur (au moins 99% de $O_2$).

## Revendications

1. Système de combustion comportant un dispositif de combustion (1) permettant la combustion d'un combustible (C) au moyen d'au moins un gaz comburant (GC), une unité d'alimentation (3) en gaz comburant (GC) qui est raccordée au dispositif de combustion (1) et qui comporte un mélangeur (31) et une source (30) de dioxygène gazeux qui fournit un gaz riche en dioxygène et qui est raccordée à une première entrée du mélangeur (31) via un dispositif (32) de contrôle du débit du gaz riche en dioxygène, des moyens de recyclage (4) qui comportent une boucle de recyclage (40) entre le dispositif de combustion (1) et une deuxième entrée du mélangeur (31), et une vanne de recyclage (V2) montée sur la boucle de recyclage (40), une première dérivation (5) qui est réalisée sur la boucle de recyclage (40) et qui comporte une vanne d'évacuation (V3), une deuxième dérivation (6) qui est réalisée sur la boucle de recyclage (40) en aval de la première dérivation (5) et de la vanne de recyclage (V2), et une unité de commande (7) qui est adaptée pour commander le dispositif (32) de contrôle du débit du gaz riche en dioxygène, la vanne de recyclage (V2) et la vanne d'évacuation (V3), de manière à pouvoir configurer le système de combustion dans un mode de fonctionnement choisi parmi au moins deux modes de fonctionnement différents (M1 ; M2) et à pouvoir passer d'un mode de fonctionnement à l'autre : un premier mode de fonctionnement (M1) dans lequel la vanne de recyclage (V2) est fermée, la vanne d'évacuation (V3) est ouverte, et le mélangeur (31) n'est pas alimenté en gaz riche en dioxygène en provenance de la source (3) de dioxygène gazeux, et un deuxième mode de fonctionnement (M2), dans lequel la vanne de recyclage (V2) est ouverte et la vanne d'évacuation (V3) est au moins partiellement ouverte ou est fermée, et le mélangeur (31) est alimenté au moins avec du gaz riche en dioxygène fourni par la source (3) de dioxygène gazeux et avec au moins une partie du gaz de combustion produit par le dispositif de combustion (1), l'unité de commande (7) étant en outre adaptée pour que la deuxième dérivation (6) débouche à l'air libre pendant les deux modes de fonctionnement (M1 ; M2), et ait pour fonction d'une part, dans les deux modes de fonctionnement (M1 ; M2), lorsque la vanne d'évacuation (V3) est au moins partiellement ouverte et la vanne de recyclage (V2) est fermée dans le premier mode de fonctionnement (M1) ou ouverte dans le deuxième mode de fonctionnement (M2), de faire entrer de l'air dans la boucle de recyclage (40) afin alimenter la deuxième entrée du mélangeur (31) au moins avec de l'air entrant, et ait pour fonction d'autre part, dans le deuxième mode de fonctionnement (M2), lorsque la vanne d'évacuation (V3) est fermée et la vanne de recyclage (V2) est ouverte, de permettre d'évacuer de la boucle de recyclage (40) un surplus (G2) du gaz de combustion (G) produit par le dispositif de combustion (1), l'autre partie (G1) du gaz de combustion (G) produit par le dispositif de combustion (1) alimentant la deuxième entrée du mélangeur (31).

2. Système de combustion la revendication 1, dans lequel le dispositif (32) de contrôle de débit du gaz riche en dioxygène comporte une vanne (V1) de contrôle de débit qui est pilotée par l'unité de commande (7), et de préférence dans lequel la vanne (V1) de contrôle de débit est une vanne à ouverture et fermeture progressives.

3. Système de combustion selon l'une quelconque des revendications 1 à 2, dans lequel la vanne de recyclage (V2) est une vanne à ouverture et fermeture progressives et/ou la vanne d'évacuation (V3) est une vanne à ouverture et fermeture progressives.

4. Système de combustion selon l'une quelconque des revendications 1 à 3, comportant au moins un capteur (33) adapté pour mesurer la concentration en dioxygène dans le gaz comburant (GC) et dans lequel l'unité de commande (7) est adaptée pour piloter le dispositif (32) de contrôle du débit du gaz riche en dioxygène en fonction de la concentration en dioxygène mesurée par ce capteur (33) au moins pendant le deuxième mode de fonctionnement (M2).

**5.** Système de combustion selon l'une quelconque des revendications 1 à 4, dans lequel le dispositif de combustion (1) comporte un ventilateur ou compresseur (10) adapté pour alimenter le dispositif de combustion (1) en gaz comburant (GC) avec un débit ($\theta_{GC}$) donné, qui est de préférence variable, et plus préférentiellement dans lequel le débit d'alimentation du dispositif de combustion (1) en combustible (C) est variable et ledit ventilateur ou compresseur (10) est adapté pour alimenter le dispositif de combustion (1) en gaz comburant (GC) avec un débit ($\theta_{GC}$), qui varie en fonction du débit d'alimentation du dispositif de combustion (1) en combustible (C).

**6.** Système de combustion selon l'une quelconque des revendications 1 à 5, comportant un dispositif (11) d'injection de dioxyde de carbone raccordé à une entrée du mélangeur (31) et adaptée pour d'injecter du dioxyde de carbone ($CO2$) gazeux dans le mélangeur (31) pendant une phase particulière (« oxycombustion dégradée ») du deuxième mode de fonctionnement (M2).

**7.** Système de combustion selon l'une quelconque des revendications 1 à 6, comportant sur la boucle de recyclage (40) un condenseur (8) adapté pour déshumidifier les fumées de combustion (FC) et pour émettre en sortie un gaz de combustion (G) dont au moins une partie est recyclée à l'entrée du mélangeur (31).

**8.** Système de combustion selon l'une quelconque des revendications 1 à 7, comportant un condenseur (34) adapté pour déshumidifier le gaz comburant (GC) avant son introduction dans le dispositif de combustion (1).

**9.** Système de combustion selon l'une quelconque des revendications 7 ou 8, dans lequel le condenseur (8 ou 34) comporte au moins un échangeur (120) comportant un liquide refroidissant (L).

**10.** Système de combustion selon la revendication 9, dans lequel
l'échangeur (120) comporte un bain (121) de liquide refroidissant (L), et des moyens d'injection (123) permettant de faire passer le fluide gazeux (FC ou GC) à déshumidifier à travers ce bain de liquide refroidissant (L), et de préférence dans lequel les moyens d'injection (123) permettent d'injecter le fluide gazeux (FC ou GC) à déshumidifier au-dessous de la surface de ce bain (121) de liquide de refroidissant (L).

**11.** Système de combustion selon l'une quelconque des revendications 1 à 10, comportant au moins un capteur (33) adapté pour mesurer la concentration en dioxygène dans le gaz comburant (GC) et dans lequel l'unité de commande (7) est adaptée pour commander le dispositif (32) de contrôle du débit du gaz riche en dioxygène , la vanne de recyclage (V2) et la vanne d'évacuation (V3), de manière à passer du deuxième mode de fonctionnement (M2) au premier mode de fonctionnement (M1) en fonction de la concentration mesurée en dioxygène dans le gaz comburant (GC).

**12.** Système de combustion selon l'une quelconque des revendications 1 à 11, dans lequel l'unité de commande (7) est adaptée pour commander le dispositif (32) de contrôle du débit du gaz riche en dioxygène, la vanne de recyclage (V2) et la vanne d'évacuation (V3), de manière à pouvoir passer d'un mode de fonctionnement (M1 ou M2) à l'autre (M2 ou M1) sans arrêter la combustion dans le dispositif de combustion (1) et/ou dans lequel, l'unité de commande (7) est adaptée pour commander de manière séquentielle l'ouverture du dispositif (32) de contrôle du débit du gaz riche en dioxygène, l'ouverture de la vanne de recyclage (V2), et de préférence la fermeture totale ou partielle de la vanne d'évacuation (V3), pour passer du premier mode de fonctionnement (M1) au deuxième mode de fonctionnement (M2) et/ou dans lequel l'unité de commande (7) est adaptée pour commander de manière séquentielle l'ouverture de la vanne d'évacuation (V3), la fermeture de la vanne de recyclage (V2), et la fermeture du dispositif (32) de contrôle du débit de du gaz riche en dioxygène, pour passer du deuxième mode de fonctionnement (M2) au premier mode de fonctionnement (M1).

**13.** Système de combustion selon l'une quelconque des revendications 1 à 12, comportant un dispositif (10) de captage du dioxyde de carbone ($CO_2$) adapté pour capter le dioxyde de carbone ($CO_2$) dans au moins une partie du gaz de combustion (G), lorsque le système de combustion fonctionne dans le deuxième mode de fonctionnement (M2) et/ou comportant au moins un dispositif de dépollution (12) monté sur la boucle de recyclage (40) et adapté pour capter un ou plusieurs polluants choisis parmi la liste suivante : particules fines, SOx, NOx, acides, métaux lourds, ammoniac, COV.

**14.** Système de combustion selon l'une quelconque des revendications 1 à 13, dans lequel le gaz riche en dioxygène fourni par la source (30) de dioxygène gazeux comporte au moins 50% de dioxygène, de préférence au moins 80% de dioxygène, et plus préférentiellement encore au moins 90% de dioxygène.

**15.** Système de combustion selon l'une quelconque des revendications 1 à 14, dans lequel le gaz riche en dioxygène fourni par la source (30) de dioxygène gazeux est du dioxygène pur ou quasi pur.

**Patentansprüche**

**1.** Verbrennungssystem mit:

einer Verbrennungsvorrichtung (1), die die Verbrennung eines Brennstoffs (C) mittels mindestens eines Verbrennungsgases (GC) erlaubt,
einer Verbrennungsgas-Zufuhreinheit (3), die mit der Verbrennungsvorrichtung (1) verbunden ist und einen Mischer (31) und eine Sauerstoffgasquelle (30) aufweist, welche ein sauerstoffreiches Gas zuführt und über eine Vorrichtung (32) zur Steuerung des Durchflusses des sauerstoffreichen Gases mit einem ersten Einlass des Mischers (31) verbunden ist,
Rezyklierungsmitteln (4), wozu eine Rezyklierungschleife (40) zwischen der Verbrennungsvorrichtung (1) und einem zweiten Einlass des Mischers (31) und ein an der Rezyklierungsschleife (40) angebrachtes Rezyklierungsventil (V2) gehören,
einer ersten Ableitung (5), die an der Rezyklierungsschleife (40) ausgebildet ist und ein Ablassventil (V3) aufweist,
einer zweiten Ableitung (6), die an der Rezyklierungsschleife (40) stromabwärts der ersten Ableitung (5) und des Rezyklierungsventils (V2) ausgebildet ist, und
einer Steuereinheit (7), die dazu ausgelegt ist, die Vorrichtung (32) zur Steuerung des Durchflusses des sauerstoffreichen Gases, das Rezyklierungsventil (V2) und das Auslassventil (V3) derart zu steuern, dass das Verbrennungssystem in einen von mindestens zwei verschiedenen Betriebsmodi (M1; M2) konfiguriert werden kann und von einem Betriebsmodus in den anderen wechseln kann:

einem ersten Betriebsmodus (M1), in dem das Rezyklierungsventil (V2) geschlossen ist, das Ablassventil (V3) geöffnet ist und der Mischer (31) nicht mit sauerstoffreichem Gas von der Sauerstoffgasquelle (3) versorgt wird, und
einem zweiten Betriebsmodus (M2), in dem das Rezyklierungsventil (V2) geöffnet ist und das Ablassventil (V3) zumindest teilweise offen ist oder geschlossen ist und der Mischer (31) zumindest mit sauerstoffreichem Gas von der Sauerstoffgasquelle (3) und mit mindestens einem Teil des von der Verbrennungsvorrichtung (1) erzeugten Gases versorgt wird,
wobei die Steuereinheit (7) weiterhin dazu ausgelegt ist, dass die zweite Ableitung (6) in den zwei Betriebsmodi (M1; M) an die freie Luft mündet, und
einerseits die Funktion hat, in den zwei Betriebsmodi (M1; M2), wenn das Ablassventil (V3) zumindest teilweise offen ist und das Rezyklierungsventil (V2) in dem ersten Betriebsmodul (M1) geschlossen ist oder in dem zweiten Betriebsmodus (M2) offen ist, Luft in die Rezyklierungsschleife (40) einzuleiten, um den zweiten Einlass des Mischers (31) zumindest mit Einlassluft zu versorgen,
und andererseits die Funktion hat, in dem zweiten Betriebsmodus (M2), wenn das Ablassventil (V3) geschlossen ist und das Rezyklierungsventil (V2) geöffnet ist, einen Überschuss (G2) eines von der Verbrennungsvorrichtung (1) erzeugten Verbrennungsgases (G) aus der Rezyklierungsschleife (40) abzulassen, während der andere Teil (G1) des von der Verbrennungsvorrichtung (1) erzeugten Verbrennungsgases (G) den zweiten Einlass des Mischers (31) versorgt.

**2.** Verbrennungssystem nach Anspruch 1, wobei die Vorrichtung (32) zur Steuerung des Durchflusses des sauerstoffreichen Gases ein Durchflusssteuerventil (V1) aufweist, welches von der Steuereinheit (7) gesteuert wird, und wobei bevorzugt das Durchflusssteuerventil (V1) ein Ventil mit progressiver Öffnung und Schließung ist.

**3.** Verbrennungssystem nach einem der Ansprüche 1 bis 2, wobei das Rezyklierungsventil (V2) ein Ventil mit progressiver Öffnung und Schließung ist und/oder das Ablassventil (V3) ein Ventil mit progressiver Öffnung und Schließung ist.

**4.** Verbrennungssystem nach einem der Ansprüche 1 bis 3, mit mindestens einem Sensor (33), der dazu ausgelegt ist, die Sauerstoffkonzentration in dem Verbrennungsgas (GC) zu messen, und wobei die Steuereinheit (7) dazu ausgelegt ist, die Vorrichtung (32) zur Steuerung des Durchflusses des sauerstoffreichen Gases in Abhängigkeit der von dem Sensor (33) gemessenen Sauerstoffkonzentration zumindest während des zweiten Betriebsmodus (M2) zu steuern.

**5.** Verbrennungssystem nach einem der Ansprüche 1 bis 4, wobei die Verbrennungsvorrichtung (1) einen Ventilator oder Kompressor (10) umfasst, der dazu ausgelegt ist, die Verbrennungsvorrichtung (1) mit einem Verbrennungsgas (GC) mit einem vorgegebenen, bevorzugt variablen, Durchfluss ($\theta_{CG}$) zu versorgen, und wobei bevorzugter der Zufuhrdurchfluss der Verbrennungsvorrichtung (1) mit Brennstoff (C) variabel ist und der Ventilator oder Kompressor (10) dazu ausgelegt ist, die Verbrennungsvorrichtung (1) mit Verbrennungsgas (GC) mit einer Durchflussmenge ($\theta_{CG}$) zu versorgen, die in Abhängigkeit des Zufuhrdurchflusses der Verbrennungsvorrichtung (1) mit Brennstoff (C) variiert.

**6.** Verbrennungssystem nach einem der Ansprüche 1 bis 5, welches eine Kohlenstoffdioxid-Einleiteinrichtung (11) aufweist, die mit einem Einlass des Mischers (31) verbunden ist und dazu ausgelegt ist, gasförmiges Kohlenstoffdioxid ($CO_2$) während einer bestimmten Phase ("abgeschwächte Oxyfuel-Verbrennung") des zweiten Betriebsmodus (M2) in den Mischer (31) einzuleiten.

**7.** Verbrennungssystem nach einem der Ansprüche 1 bis 6, welches an der Rezyklierungsschleife (4) einen Kondensator (8) aufweist, der dazu ausgelegt ist, die Verbrennungsgase (FC) zu entfeuchten und am Auslass ein Verbrennungsgas (G) abzugeben, von dem mindestens ein Teil zu dem Einlass des Mischers (31) rezykliert wird.

**8.** Verbrennungssystem nach einem der Ansprüche 1 bis 7, welches einen Kondensator (34) aufweist, der dazu ausgelegt ist, das Verbrennungsgas (GC) vor dessen Einleitung in die Verbrennungsvorrichtung (1) zu entfeuchten.

**9.** Verbrennungssystem nach einem der Ansprüche 7 oder 8, wobei der Kondensator (8 oder 34) mindestens einen Wärmetauscher (120), der eine Kühlflüssigkeit (L) enthält, aufweist.

**10.** Verbrennungssystem gemäß Anspruch 9, wobei der Wärmetauscher (120) ein Bad (121) von Kühlflüssigkeit (L) und Einleitmittel (123) umfasst, die es ermöglichen, das zu entfeuchtende gasförmige Fluid (FC oder GC) durch dieses Bad von Kühlflüssigkeit (L) zu leiten, und wobei bevorzugt die Einleitmittel (123) es ermöglichen, das zu entfeuchtende gasförmige Fluid (FC oder GC) unter die Oberfläche des Bades (121) von Kühlflüssigkeit (L) einzuleiten.

**11.** Verbrennungssystem nach einem der Ansprüche 1 bis 10, welches mindestens einen Sensor (33) aufweist, der dazu ausgelegt ist, die Sauerstoffkonzentration in dem Verbrennungsgas (GC) zu messen, und wobei die Steuereinheit (7) dazu ausgelegt ist, die Vorrichtung (32) zur Steuerung des Durchflusses des sauerstoffreichen Gases, das Rezyklierungsventil (V2) und das Ablassventil (V3) so zu steuern, dass in Abhängigkeit von der gemessenen Sauerstoffkonzentration in dem Verbrennungsgas (GC) ein Übergang von dem zweiten Betriebsmodus (M2) in den ersten Betriebsmodus (M1) erfolgt.

**12.** Verbrennungssystem nach einem der Ansprüche 1 bis 11, wobei die Steuereinheit (7) dazu ausgelegt ist, die Vorrichtung (32) zur Steuerung des Durchflusses des sauerstoffreichen Gases, das Rezyklierungsventil (V2) und das Ablassventil (V3) so zu steuern, dass von einem Betriebsmodus (M1 oder M2) in den anderen (M2 oder M1) gewechselt werden kann, ohne die Verbrennung in der Verbrennungsvorrichtung (1) zu stoppen, und/oder wobei die Steuereinheit (7) dazu ausgelegt ist, nacheinander das Öffnen der Vorrichtung (32) zur Steuerung des Durchflusses des sauerstoffreichen Gases, das Öffnen des Rezyklierungsventils (V2) und das Öffnen des Ablassventils (V3) zu steuern, um von dem ersten Betriebsmodus (M1) in den zweiten Betriebsmodus (M2) überzugehen, und/oder wobei die Steuereinheit (7) dazu ausgelegt ist, nacheinander das Öffnen des Ablassventils (V3), das Schließen des Rezyklierungsventils (V2) und das Schließen der Vorrichtung (32) zur Steuerung des Durchflusses des sauerstoffreichen Gases, zu steuern, um von dem zweiten Betriebsmodus (M2) in den ersten Betriebsmodus (M1) überzugehen.

**13.** Verbrennungssystem gemäß einem der Ansprüche 1 bis 12, welches eine Vorrichtung (10) zum Einfangen von Kohlenstoffdioxid (CO2) aufweist, die dazu ausgelegt ist, das Kohlenstoffdioxid (CO2) in mindestens einem Teil des Verbrennungsgases (G) einzufangen, wenn das Verbrennungssystem Verbrennung im zweiten Betriebsmodus (M2) arbeitet, und/oder mindestens eine Reinigungsvorrichtung (12) aufweist, die an der Rezyklierungsschleife (40) angebracht ist und dazu ausgelegt ist, einen oder mehrere Schadstoffe bzw. Verunreinigungen einzufangen, die aus der folgenden Liste ausgewählt sind: Feinstaub, SOx, NOx, Säuren, Schwermetalle, Ammoniak, VOC.

**14.** Verbrennungssystem nach einem der Ansprüche 1 bis 13, wobei das von der Sauerstoffquelle (30) zugeführte sauerstoffreiche Gas mindestens 50 % Sauerstoff, bevorzugt mindestens 80 % Sauerstoff und noch bevorzugter mindestens 90 % Sauerstoff enthält.

**15.** Verbrennungssystem nach einem der Ansprüche 1 bis 14, wobei das von der Sauerstoffgasquelle (30) zugeführte sauerstoffreiche Gas reiner oder nahezu reiner Sauerstoff ist.

**Claims**

**1.** A combustion system comprising a combustion device (1) for the combustion of a fuel (C) by means of at least one oxidizing gas (GC), an oxidizing gas (GC) supply unit (3) which is connected to the combustion device (1) and which comprises a mixer (31) and a source (30) of molecular oxygen gas which supplies a molecular-oxygen-rich gas and is connected to a first inlet of the mixer (31) via a device (32) for controlling the flow of molecular-oxygen-rich gas, recycling means (4) which comprise a recycling loop (40) between the combustion device (1) and a second inlet of the mixer (31), and a recycling valve (V2) mounted on the recycling loop (40), a first bypass (5) on the recycling loop (40) comprising a discharge valve (V3), a second bypass (6) on the recycling loop (40) downstream of the first bypass (5) and the recycling valve (V2), and a control unit (7) that is adapted to control the device (32) for controlling the flow of molecular-oxygen-rich gas, the recycling valve (V2) and the discharge valve (V3), so as to be able to configure the combustion system in an operating mode selected from at least two different operating modes (M1; M2) and to be able to switch from one operating mode to the other: a first operating mode (M1) wherein the recycling valve (V2) is closed, the discharge valve (V3) is open, and the mixer (31) is not supplied with molecular-oxygen-rich gas from the source (3) of molecular oxygen gas, and a second operating mode (M2), wherein the recycling valve (V2) is open and the discharge valve (V3) is at least partially open or is closed, and the mixer (31) is supplied at least with molecular-oxygen-rich gas supplied by the source (3) of molecular oxygen gas and with at least part of the combustion gas produced by the combustion device (1), the control unit (7) being further adapted so that the second bypass (6) opens to the open air during both operating modes (M1; M2), and has the function, on the one hand, in the two operating modes (M1; M2), when the discharge valve (V3) is at least partially open and the recycling valve (V2) is closed in the first operating mode (M1) or open in the second operating mode (M2), of allowing air to enter the recycling loop (40) in order to supply the second inlet of the mixer (31) at least with incoming air, and has the function, on the other hand, in the second operating mode (M2), when the discharge valve (V3) is closed and the recycling valve (V2) is open, of allowing a surplus (G2) of the combustion gas (G) produced by the combustion device (1) to be discharged from the recycling loop (40), the other fraction (G1) of the combustion gas (G) produced by the combustion device (1) supplying the second inlet of the mixer (31).

**2.** The combustion system according to claim 1, wherein the device (32) for controlling the flow of molecular-oxygen-rich gas comprises a flow-control valve (V1) which is controlled by the control unit (7), and preferably wherein the flow-control valve (V1) is a progressive opening and closing valve.

**3.** The combustion system according to any one of claims 1 to 2, wherein the recycling valve (V2) is a progressive opening and closing valve and/or the discharge valve (V3) is a progressive opening and closing valve.

**4.** The combustion system according to any one of claims 1 to 3, comprising at least one sensor (33) adapted to measure the concentration of molecular oxygen in the oxidizing gas (GC) and wherein the control unit (7) is adapted to control the device (32) for controlling the flow of molecular-oxygen-rich gas according to the concentration of molecular oxygen measured by this sensor (33) at least during the second operating mode (M2).

**5.** The combustion system according to any one of claims 1 to 4, wherein the combustion device (1) comprises a fan or compressor (10) adapted to supply the combustion device (1) with oxidizing gas (GC) at a given flow rate ($\theta_{GC}$), which is preferably variable and more preferably, wherein the rate of supply of fuel (C) to the combustion device (1) is variable and said a fan or compressor (10) is adapted to supply the combustion device (1) with oxidizing gas (GC) at a rate ($\theta_{GC}$), which varies according to the rate of supply of fuel (C) to the combustion device (1).

**6.** The combustion system according to any one of claims 1 to 5, comprising a carbon dioxide injection device (11) connected to an inlet of the mixer (31) and adapted to inject carbon dioxide gas ($CO_2$) into the mixer (31) during a particular phase ("degraded oxy-combustion") of the second operating mode (M2).

**7.** The combustion system according to any one of claims 1 to 6, comprising on the recycling loop (40) a condenser (8) adapted to dehumidify the combustion fumes (FC) and to emit at the outlet a combustion gas (G), at least a fraction of which is recycled to the inlet of the mixer (31).

**8.** The combustion system according to any one of claims 1 to 7, comprising a condenser (34) adapted to dehumidify the oxidizing gas (GC) prior to its introduction into the combustion device (1).

9. The combustion system according to any one of claims 7 or 8, wherein the condenser (8 or 34) comprises at least one exchanger (120) comprising a coolant liquid (L).

10. The combustion system according to claim 9 wherein the exchanger (120) comprises a bath (121) of coolant liquid (L), and injection means (123) making it possible to move the gaseous fluid (FC or GC) to be dehumidified through this bath of coolant liquid (L), and preferably wherein the injection means (123) make it possible to inject the gaseous fluid (FC or GC) to be dehumidified below the surface of this bath (121) of coolant liquid (L).

11. A combustion system according to any one of claims 1 to 10, comprising at least one sensor (33) adapted to measure the concentration of molecular oxygen in the oxidizing gas (GC) and wherein the control unit (7) is adapted to control the device (32) for controlling the flow of molecular-oxygen-rich gas, the recycling valve (V2) and the discharge valve (V3), so as to switch from the second operating mode (M2) to the first operating mode (M1) according to the measured concentration of molecular oxygen in the oxidizing gas (GC).

12. The combustion system according to any one of claims 1 to 11, wherein the control unit (7) is adapted to control the device (32) for controlling the flow of molecular-oxygen-rich gas, the recycling valve (V2) and the discharge valve (V3), so as to be able to switch from one operating mode (M1 or M2) to the other (M2 or M1) without halting combustion in the combustion device (1) and/or wherein the control unit (7) is adapted to sequentially control the opening of the device (32) for controlling the flow of molecular-oxygen-rich gas, the opening of the recycling valve (V2), and preferably the total or partial closing of the discharge valve (V3), so as to switch from the first operating mode (M1) to the second operating mode (M2) and /or wherein the control unit (7) is adapted to sequentially control the opening of the discharge valve (V3), the closing of the recycling valve (V2), and the closing of the device (32) for controlling the flow of molecular-oxygen-rich gas, so as to switch from the second operating mode (M2) to the first operating mode (M1).

13. The combustion system according to any one of claims 1 to 12, comprising a carbon dioxide ($CO_2$) capture device (10) adapted to capture carbon dioxide ($CO_2$) in at least a fraction of the combustion gas (G), when the combustion system is operating in the second operating mode (M2) and/or, comprising at least one pollution-removing device (12) mounted on the recycling loop (40) and adapted to capture one or more pollutants selected from the following list: fine particles, SOx, NOx, acids, heavy metals, ammonia, VOCs.

14. The combustion system according to any one of claims 1 to 13, wherein the molecular-oxygen-rich gas supplied by the source (30) of molecular oxygen gas comprises at least 50% molecular oxygen, preferably at least 80% molecular oxygen, and even more preferably at least 90% molecular oxygen.

15. The combustion system according to any one of claims 1 to 14, wherein the molecular-oxygen-rich gas supplied by the source (30) of molecular oxygen gas is pure or near-pure molecular oxygen.

FIG.1

EP 4 537 018 B1

FIG.2

M1 "Combustion classique"

EP 4 537 018 B1

M2 "Oxycombustion avec recyclage" et "Oxycombustion dégradée"

FIG.3

EP 4 537 018 B1

FIG.4

M2 "Oxycombustion avec recyclage" et "Oxycombustion améliorée"

EP 4 537 018 B1

FIG.5

FIG.6

FIG.7

FIG.8

FIG.9

FIG.10

EP 4 537 018 B1

FIG.11

**EP 4 537 018 B1**

## RÉFÉRENCES CITÉES DANS LA DESCRIPTION

**Documents brevets cités dans la description**

- WO 2011148298 A
- WO 2016071648 A
- WO 2020030419 A